# EUROPEAN PATENT APPLICATION

(11) **EP 1 832 916 A1**
(43) Date of publication of application: **12.09.2007**
(21) Application number: 05809553.0
(22) Date of filing: 28.11.2005
(51) Int. Cl.: G03B 11/04, G03B 17/02

(54) **LENS HOOD DEVICE, AND IMAGE PICKUP DEVICE USING THE SAME**

(30) Priority: 14.12.2004 JP 2004361189; 12.10.2005 JP 2005298118
(71) Applicant: MATSUSHITA ELECTRIC INDUSTRIAL CO., LTD., Osaka 571-8501 (JP)
(72) Inventor: OGAWA, Tomohiko c/o Matsushita Elec. Ind. Co., Ltd., Chuo-ku, Osaka-shi, Osaka 540-6319 (JP); AMANO, Hiromi c/o Matsushita Elect. Ind. Co., Ltd., Chuo-ku, Osaka-shi, Osaka 540-6319 (JP); MORIYASU, Yoshitada c/o Matsushita Electr. Ind. Co., Ltd., Chuo-ku, Osaka-shi, Osaka 540-6319 (JP)
(74) Representative: Stippl, Hubert
(86) International application number: PCT/JP2005/021806
(87) International publication number: WO 2006/064654

(57) **Abstract**

A lens hood device includes a barrier case (11) to cover the front and back of a lens barrier unit (32) in an optical axis direction and to have a non-circular opening at a position passed by the optical axis, and a plurality of lens barriers (14 to 17) arranged rotatably in parallel with respect to a main plane of the barrier case (11) and made rotatable between a position to cover the whole face of the opening and a position to open the opening. The lens barriers (14 to 17) are contained in the barrier case (11) in order not to be exposed at the opening, when they are positioned to open the opening. The thus provided lens hood device can improve the operability without enlarging the size of an image pickup device.

## Description

### Technical Field

The present invention relates to a lens hood device applied effectively to an image pickup device such as a video camera and a digital still camera.

### Background Art

In a typical shooting with a video camera, a lens hood device is attached to the tip of the lens of the camera body in order to prevent the entrance of scattered light into the lens. When the video camera is not in use, a lens cap is attached to the tip of the lens barrel facing a subject so as to protect the lens (see Patent documents 1-3 for example).

A conventional lens hood and a conventional lens cap will be described below.

FIGs. 32-35 shows a conventional lens hood and a conventional lens cap attached to a video camera body. FIG. 32 is a perspective view showing the video camera from which the lens cap and the lens hood are detached.
FIG. 33 is a perspective view the video camera to which the lens cap and the lens hood are attached. FIG. 34 is a perspective view showing that the lens cap is hanging with a strap from the body. FIG. 35 is a perspective view showing the lens cap attached to a grip belt.

A video camera body 101 is a device capable of converting an incident light signal to an electric signal, generating a video signal (and an audio signal) from the electric signal, and recording/reproducing the signals on/from a recording medium. A lens cover 102 is an outer case for including optical parts such as a lens unit and an image pickup element and for covering the lens unit. The lens cover 102 is made of a resin. A lens front frame 103 is arranged at the tip of the lens cover 102 in the optical axis direction in order to fix the lens unit from the front. A female screw part 103a is formed on the inner periphery part of the lens front frame 103, to which a lens hood 104 and a conversion lens (not shown) can be attached. The lens hood 104 is attached to the lens front part so as to reduce the scattered light and prevent a flare in the video signal.

The lens cap 105 is attached to the lens hood 104 arranged in the lens front part so as to prevent scratch and stains on the lens. The lens cap 105 can be attached to the lens front frame 103 or the lens hood 104. A slit 105a is formed on the back face of the lens cap 105 so as to be fitted with a protruding part of a holding protrusion 107, and thus the lens cap 105 can be held at a body grip part. A lens cap strap 106 connects the video camera body 101 and the lens cap 105, and prevents the lens cap 105 from falling when the lens cap 105 is detached from the lens hood 104.

The holding protrusion 107 is attached to the body grip part so as to attach/detach the lens cap 105. The protruding part 107a is formed at the holding protrusion 107 and it can be fitted with the slit 105a formed on the back face of the lens cap 105.

A lens 108 forms the lens unit, and it is exposed partially through a circular opening formed in the lens front frame 103.

The operations will be described below.

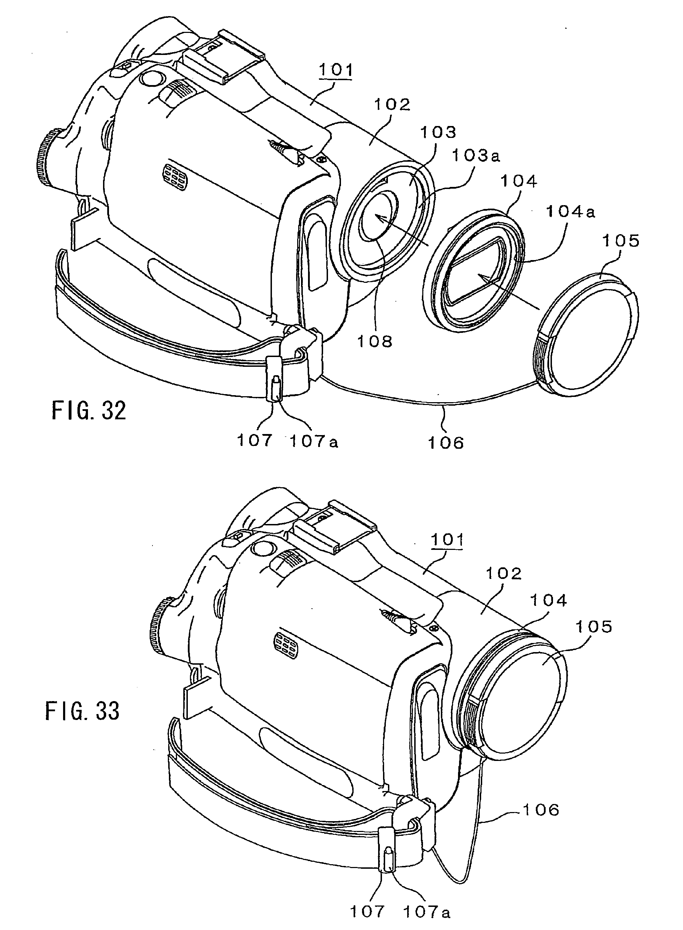

As shown in FIG. 33, when the video camera is not in use, the lens cap 105 is attached to the tip of the lens hood 104 attached to the video camera body 101. Thereby, the lens included in the video camera body 101 can be protected from dust, scratching and the like.

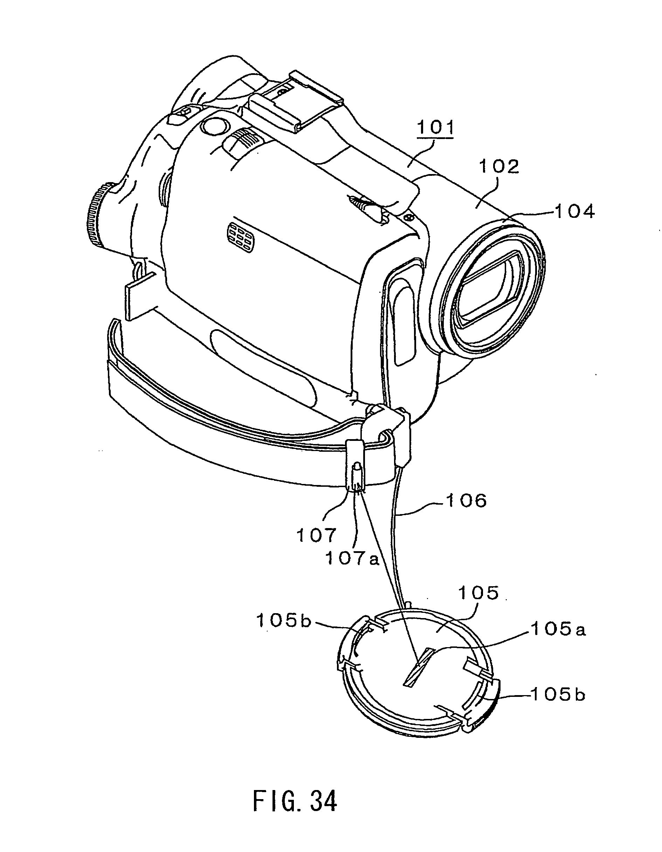

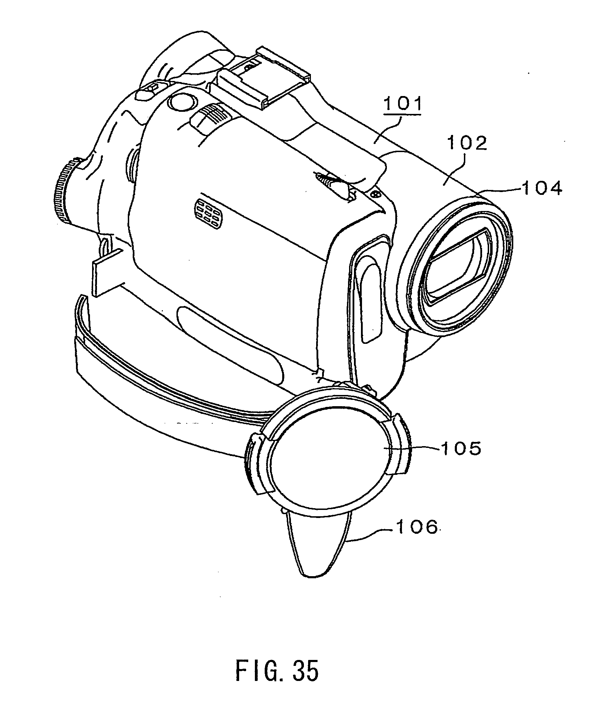

When the video camera is used for shooting, the lens cap 105 is detached from the lens hood 104 and hung with the lens cap strap 106 from the video camera body 101 as shown in FIG. 34. Alternatively, as shown in FIG. 35, the protruding part 107a of the holding protrusion 107 is inserted into the slit 105a of the lens cap 105 so as to hold the lens cap 105 at the body grip part. Thereby, fall or loss of the lens cap 105 can be prevented.
Patent document 1: JP H11-109441 A
Patent document 2: JP 2002-72289 A
Patent document 3: Utility model registration No. 2535068

### Disclosure of Invention

### Problem to be Solved by the Invention

However, according to the above-mentioned configuration, problems below can occur.

(1) As shown in FIG. 32, due to the configuration in which the lens cap 105 is attached in front of the lens hood 104, the video camera body 101 becomes larger and the portability will deteriorate. Particularly, the length in the lens optical axis direction will be increased.

(2) As shown in FIG. 34, at the time of attaching the lens cap 105 to the video camera body 101, a pair of engagement hooks 105b formed on the back face of the lens cap 105 are engaged only with the groove 104a formed on the inner periphery of the lens hood 104. Therefore, the lens cap 105 may be detached easily from the video camera body 101 as a result of the shock caused by falling of the video camera body 101 for example. When the lens cap 105 is detached accidentally, the surface of the lens 108 may be damaged due to scratch or adhesion of dust.

(3) During a shooting, if the lens cap 105 is hung with the lens cap strap 106 from the video camera body 101 as shown in FIG. 34, the lens cap may move freely to hinder the shooting or the like.

(4) During a shooting, if the lens cap 105 is attached to the holding protrusion 107 and fixed to the body grip part as shown in FIG. 35, the size of the video camera body 101 in the shooting state will be increased.

(5) During a shooting, if the lens cap 105 is attached to the holding protrusion 107 and fixed to the body grip part as shown in FIG. 35, the lens cap 105 may be detached from the holding protrusion 107 so as to assume the state as shown in FIG. 34 due to a poor fitting between the slit 105a and the protruding part 107a, or due to the shock applied from the exterior. When the video camera enters the state as shown in FIG. 34 during a shooting, the lens cap 105 swung by the lens cap strap 106 may bump into the video camera body 101, and the impact noise may be recorded.

(6) In a state where the video camera body 101 is oriented toward a subject, the holding protrusion 107 is positioned in a dead space and thus, attachment of the lens cap 105 to the body grip part will be difficult. As a result, it will take time to detach the lens cap 105 from the state as shown in FIG. 33 and convert it to a state for enabling a shooting. That is, when the videographer holds the video camera body 101 with his hand so as to aim the lens at the subject (i.e., in a normal shooting), the protruding part 107a of the holding protrusion 107 is positioned toward the subject, and thus the videographer who faces the subject will have difficulty in visually observing the protruding part 107a of the holding protrusion 107. Even if the videographer attempts to attach the lens cap 105 to the holding protrusion 107 under this condition, it will not be easy to insert the protruding part 107a into the slit 105a.

Therefore, with the foregoing in mind, it is an object of the present invention to provide a lens hood device that can improve the operability without increasing the size of the image pickup device. The present invention provides also an image pickup device to/from which the lens hood device can be attached/detached.

### Means for Solving Problem

For obtaining the above-mentioned objects, a lens hood device of the present invention denotes a lens hood device attached to a tip of a lens barrel member including an object lens for converging a reflection image of a subject, and having an opening that crosses perpendicularly the optical axis center as a central axis of the object lens. And the lens hood device includes a plurality of lens barriers that slide rotatably between a position to cover the whole surface of the opening and a position to open the opening, and also a housing to contain the lens barriers when the lens barriers are at the position to open the opening.

In addition, an image pickup device of the present invention includes a lens barrel member including an object lens for converging a reflection image of a subject; an image pickup element for receiving the reflection image converged by the object lens and converting it to a video signal; an information storing member for storing, on an information storing medium, the video signal converted by the image pickup element; and the above-mentioned lens hood device attached to the tip of the lens barrel member.

### Effects of the Invention

Since the lens hood device of the present invention has lens barriers that can protect a lens, and since the lens barriers are arranged in a containable manner, the lens hood device can have lens cap functions without increasing the size.

Moreover, the lens hood device, which is attached to a lens barrel of the image pickup device by screwing, will not be detached easily even when being subjected to oscillation or shocks. Even when the image pickup device is dropped by accident, the lens hood device will not be detached easily from the lens barrel, and thus the lens can be protected.

Furthermore, since the lens barrier can be opened/closed easily, the operability can be improved.

### Brief Description of Drawings

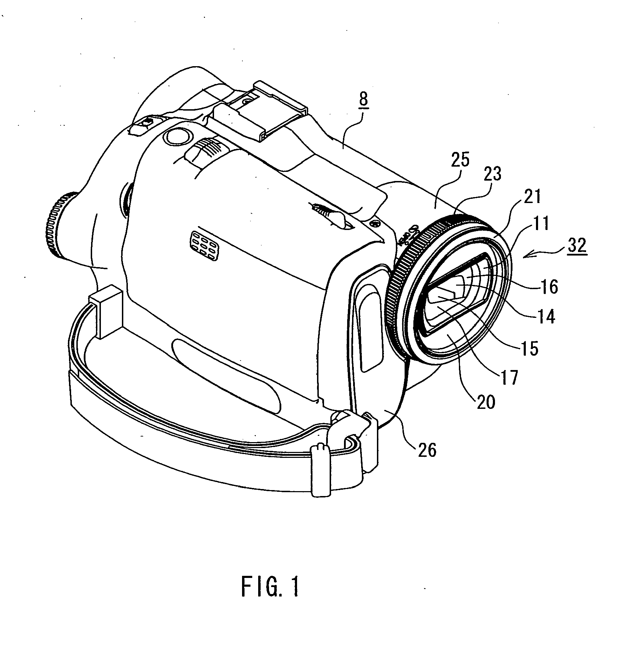

[FIG. 1] FIG. 1 is a general perspective view showing a video camera including a lens barrier unit according to Embodiment 1 of the present invention.

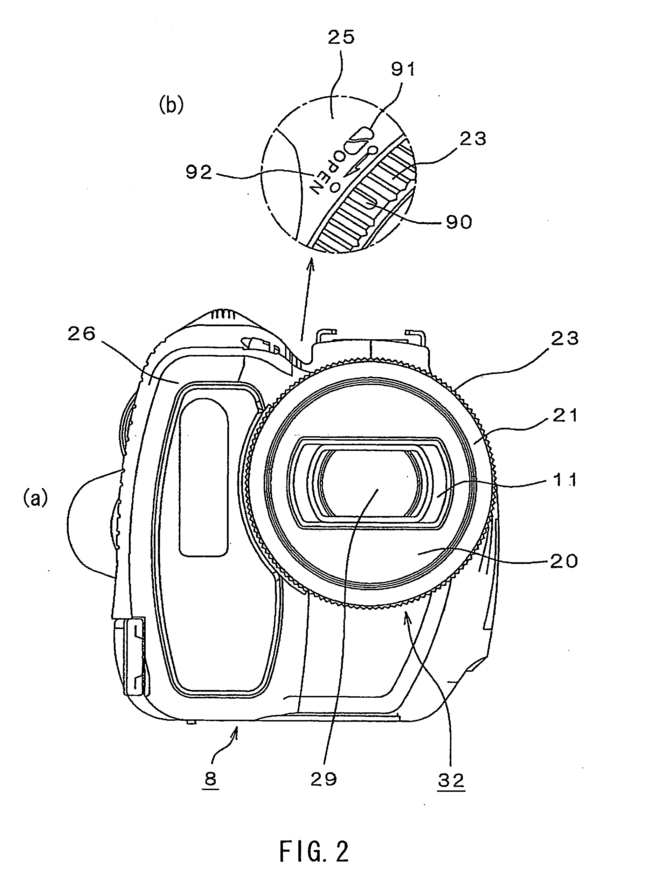

[FIG. 2] FIG. 2 includes state diagrams showing that the lens barriers according to Embodiment 1 are opened.

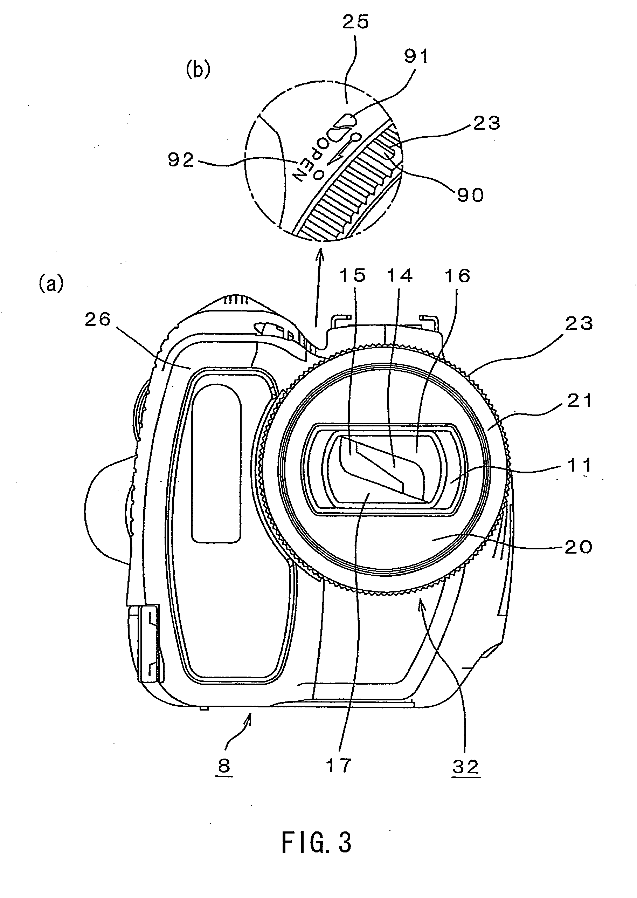

[FIG. 3] FIG. 3 includes state diagrams showing that the lens barriers according to Embodiment 1 are closed.

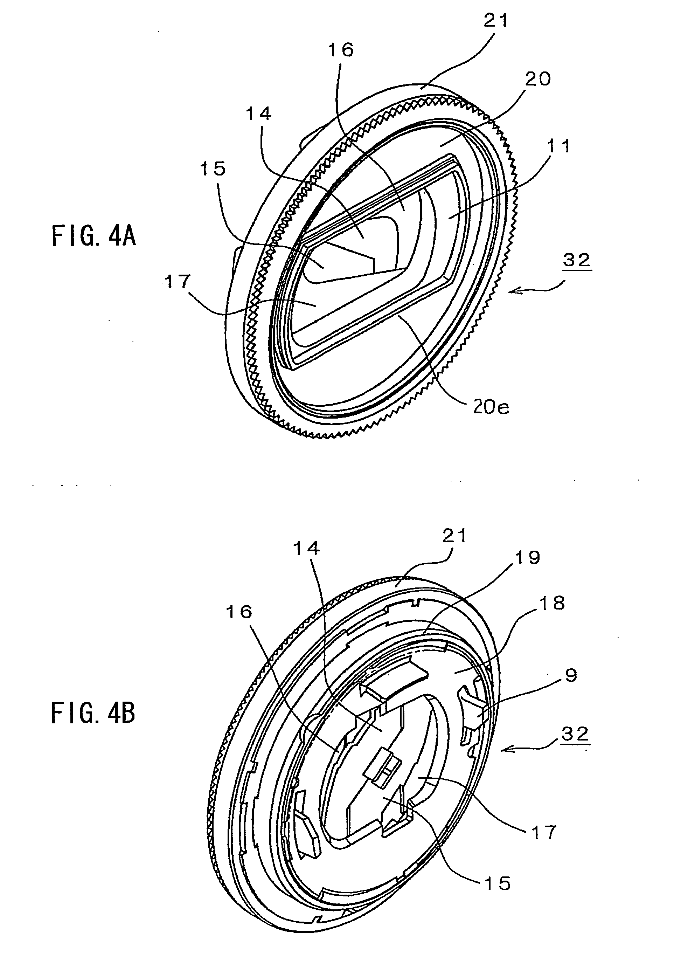

[FIG. 4] FIG. 4 includes perspective views showing the lens barrier unit according to Embodiment 1.

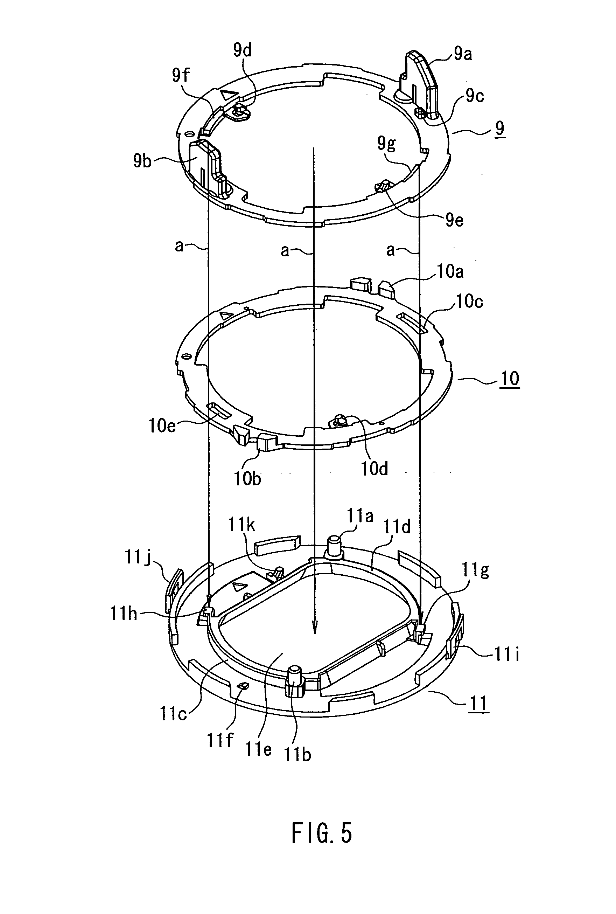

[FIG. 5] FIG. 5 is an exploded perspective view showing the internal configuration of the lens barrier unit according to Embodiment 1.

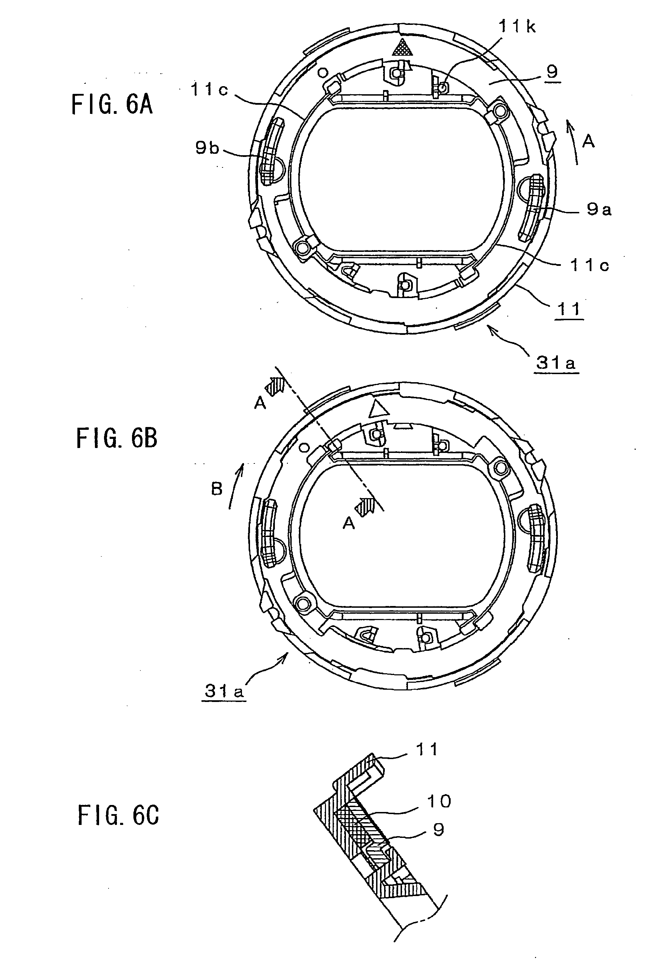

[FIG. 6] FIG. 6 includes exploded perspective views showing the internal configuration of the lens barrier unit according to Embodiment 1.

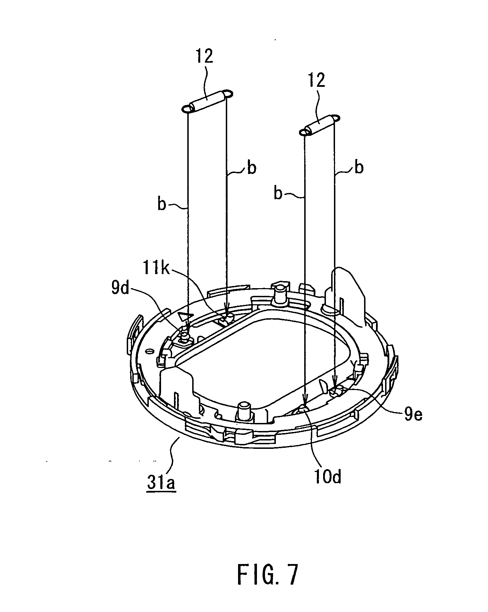

[FIG. 7] FIG. 7 is an exploded perspective view showing the internal configuration of the lens barrier unit according to Embodiment 1.

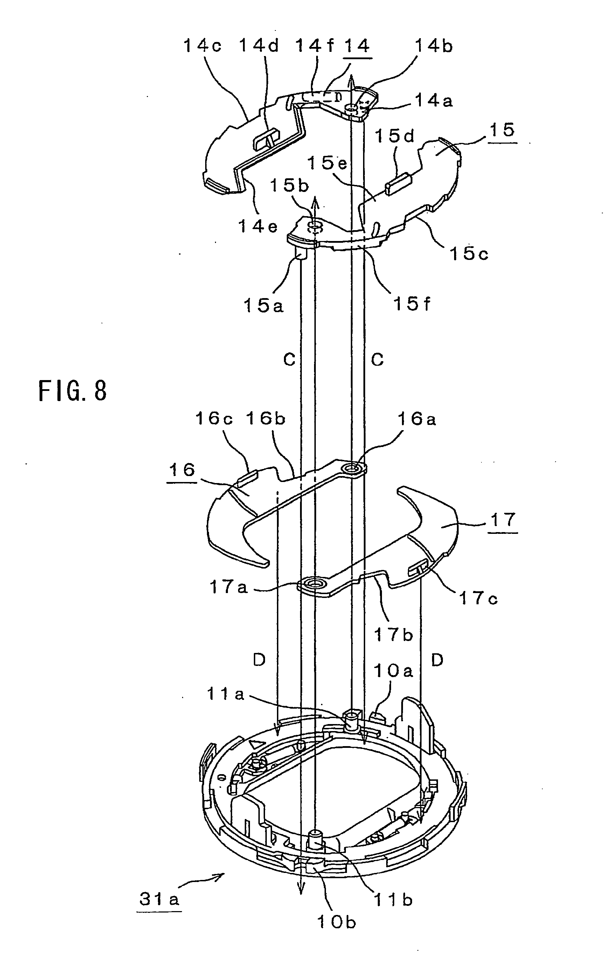

[FIG. 8] FIG. 8 is an exploded perspective view showing the internal configuration of the lens barrier unit according to Embodiment 1.

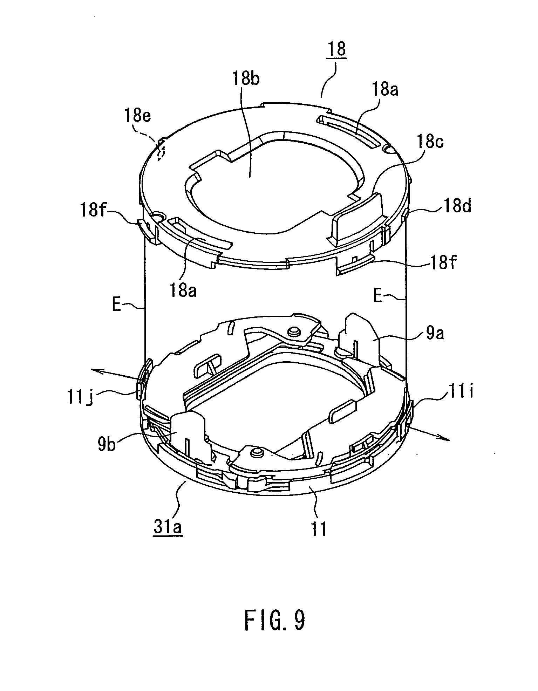

[FIG. 9] FIG. 9 is an exploded perspective view showing the internal configuration of the lens barrier unit according to Embodiment 1.

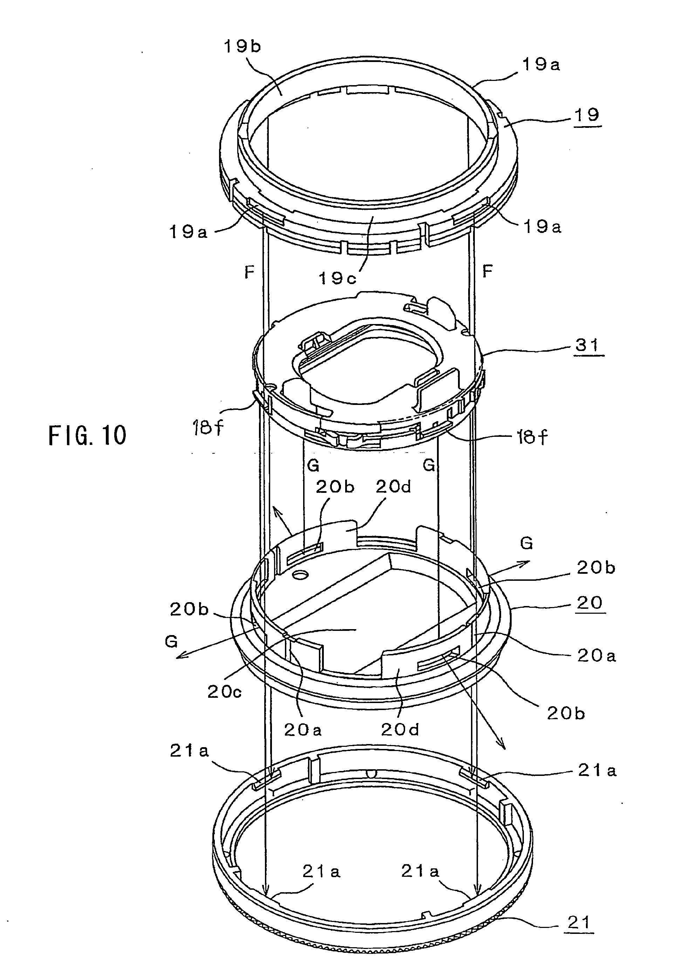

[FIG. 10] FIG. 10 is an exploded perspective view showing the internal configuration of the lens barrier unit according to Embodiment 1.

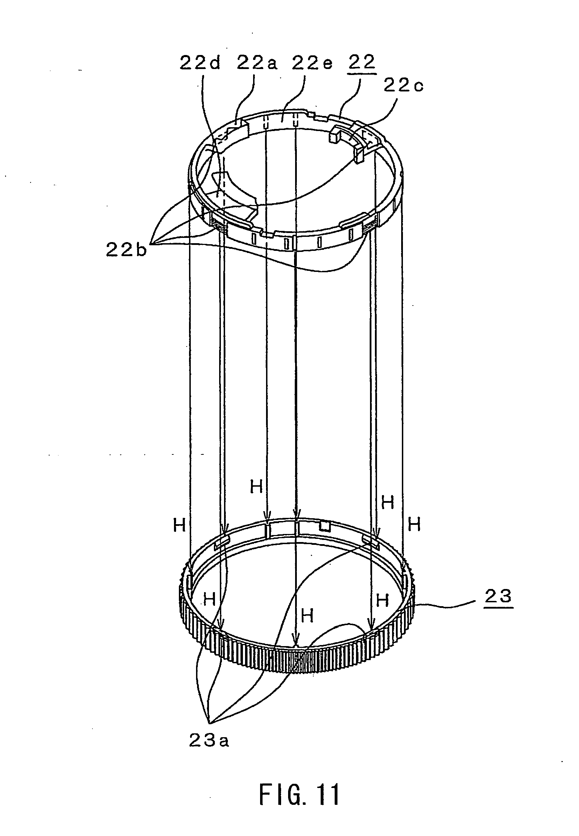

[FIG. 11] FIG. 11 is an exploded perspective view showing a configuration of a front unit having a barrier opening/closing mechanism according to Embodiment 1 of the present invention.

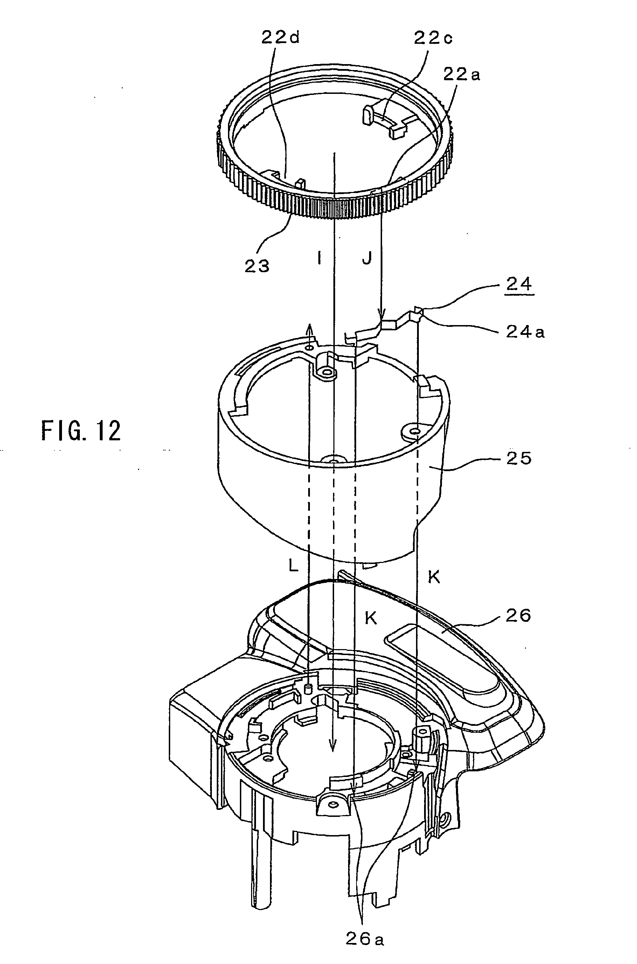

[FIG. 12] FIG. 12 is an exploded perspective view showing a configuration of a front unit having a barrier opening/closing mechanism according to Embodiment 1 of the present invention.

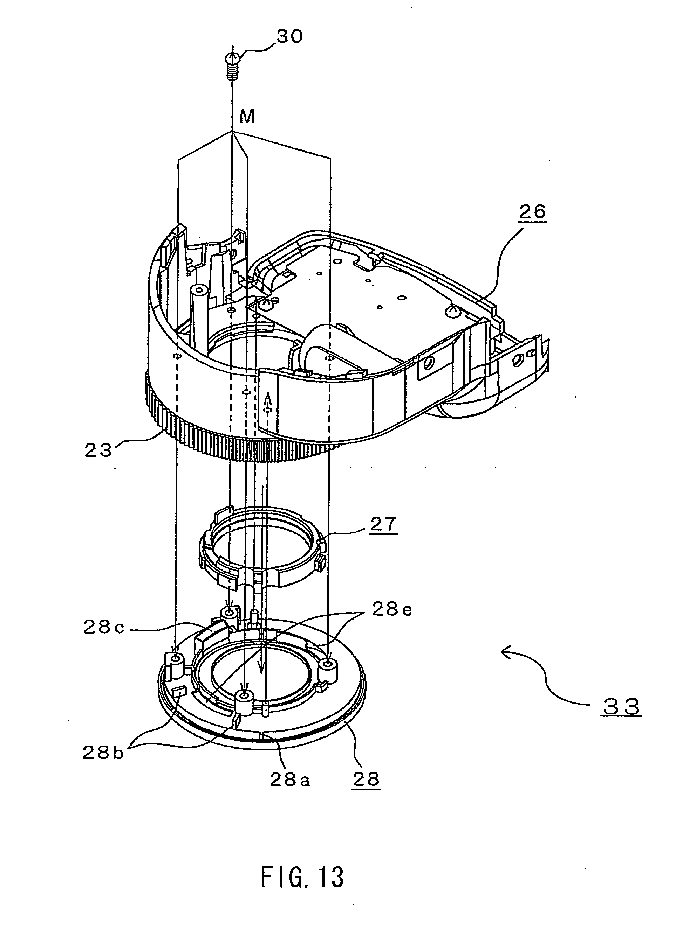

[FIG. 13] FIG. 13 is an exploded perspective view showing a configuration of a front unit having a barrier opening/closing mechanism according to Embodiment 1 of the present invention.

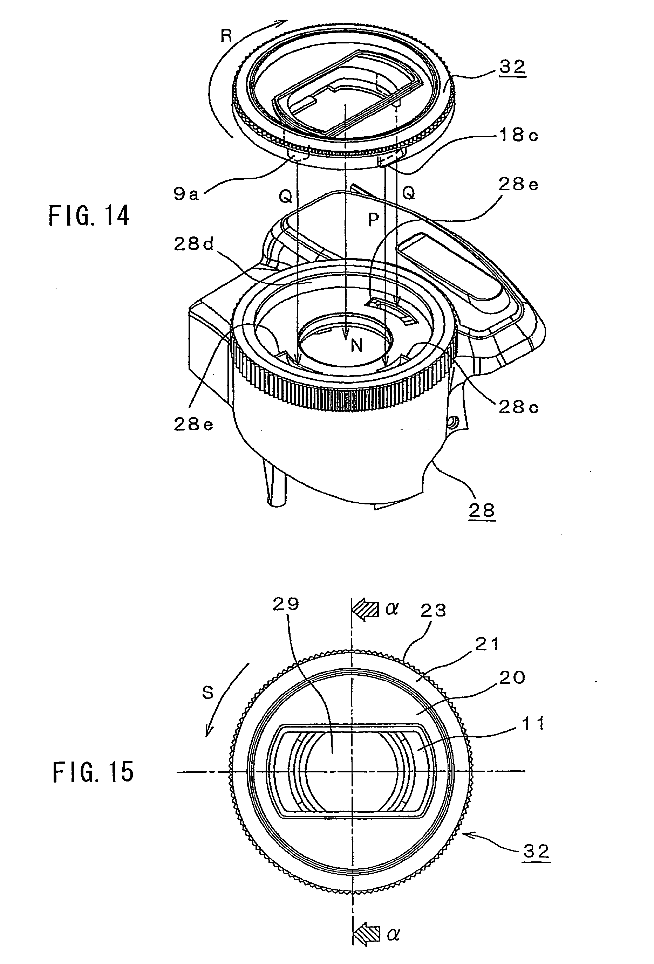

[FIG. 14] FIG. 14 is an exploded perspective view showing a configuration of a front unit having a barrier opening/closing mechanism according to Embodiment 1 of the present invention.
[FIG. 15] FIG. 15 is a front view of the lens barrier unit according to Embodiment 1.

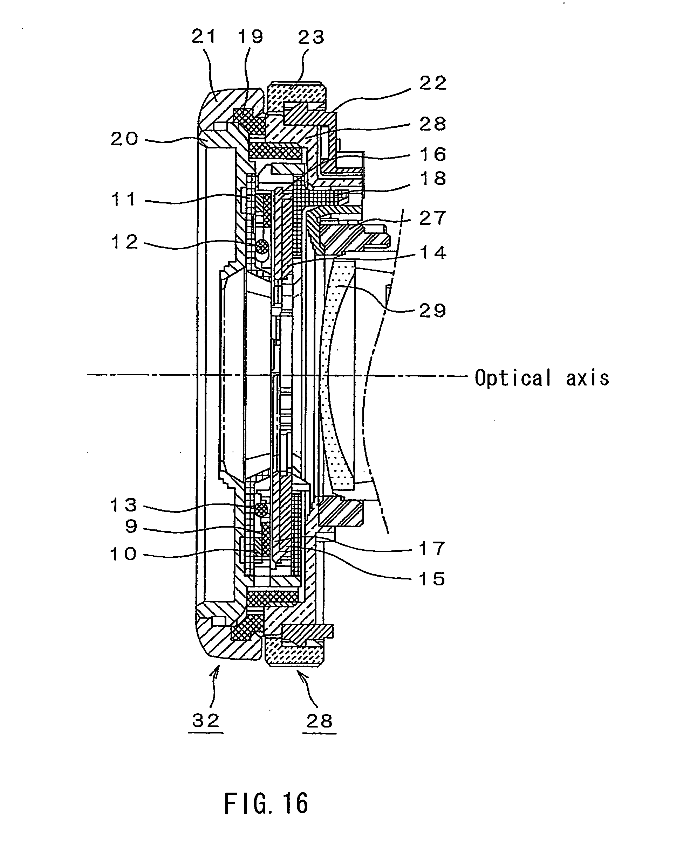

[FIG. 16] FIG. 16 is a cross-sectional view showing the video camera body according to Embodiment 1 to which the lens barrier unit is attached.

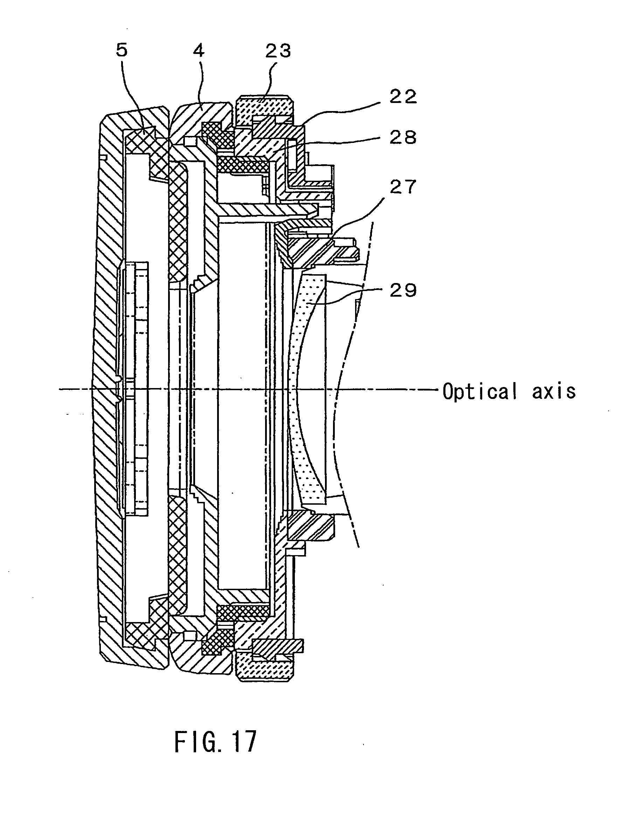

[FIG. 17] FIG. 17 is a cross-sectional view showing the video camera body according to Embodiment 1 to which a conventional lens hood and furthermore a conventional lens cap are attached.

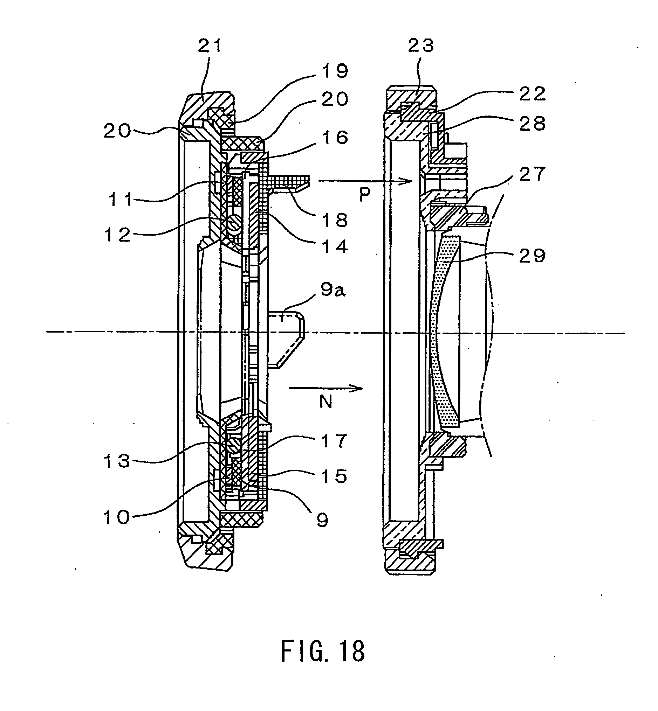

[FIG. 18] FIG. 18 is a cross-sectional view showing the video camera body according to Embodiment 1 from which the lens barrier unit is detached.

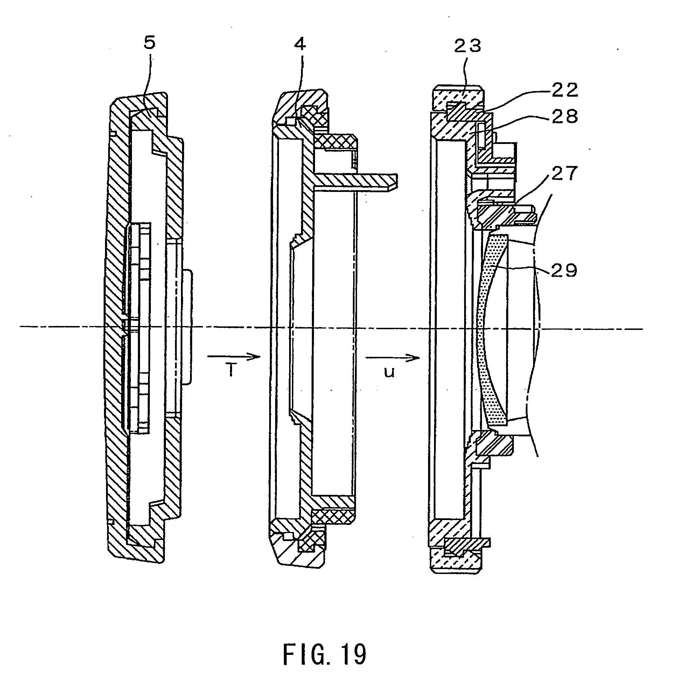

[FIG. 19] FIG. 19 is a cross-sectional view showing the video camera body according to Embodiment 1 from which the conventional lens hood and the lens cap are detached.

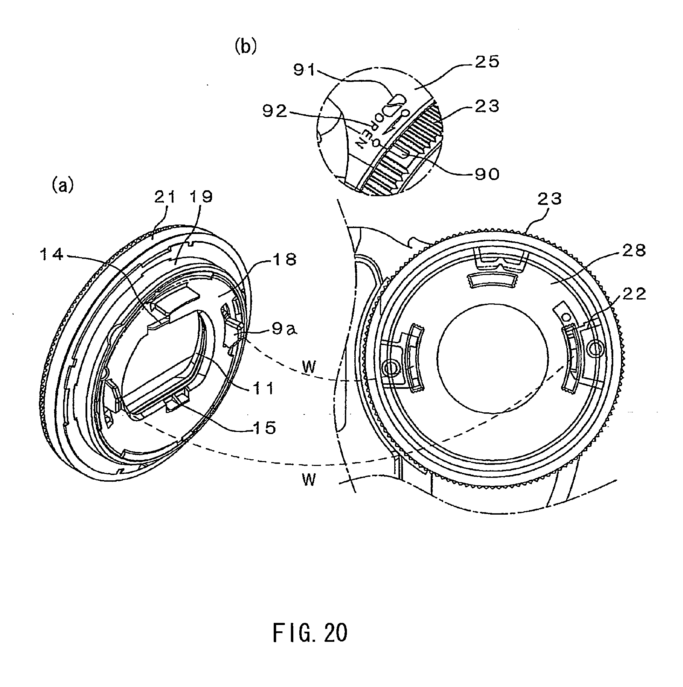

[FIG. 20] FIG. 20 includes perspective views showing the lens barrier unit and the front unit when the lens barrier according to Embodiment 1 is opened.

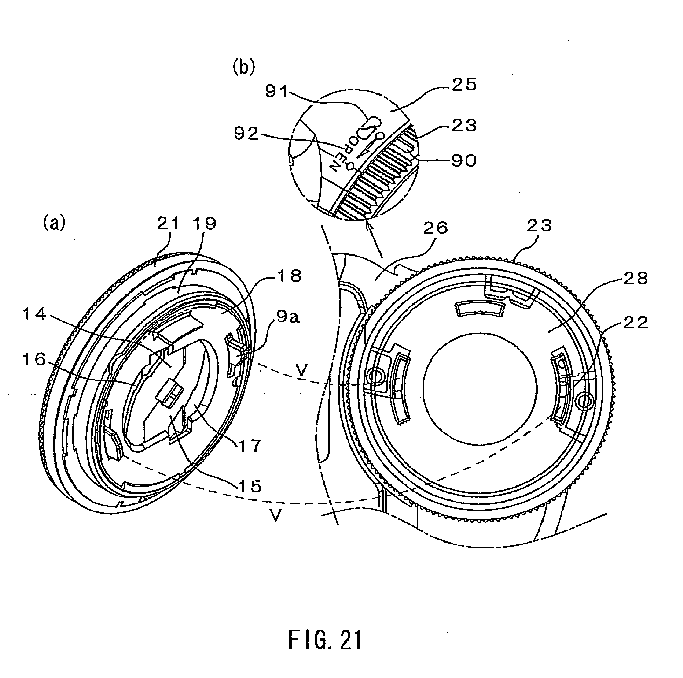

[FIG. 21] FIG. 21 includes perspective views showing the lens barrier unit and the front unit when the lens barrier according to Embodiment 1 is closed.

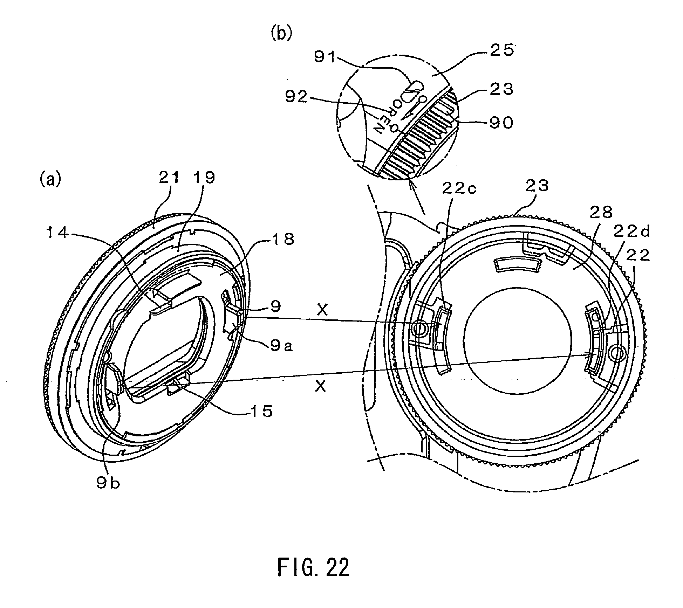

[FIG. 22] FIG. 22 includes perspective views showing attachment of a lens barrier unit with opened lens barriers when the open/close ring position of the front unit according to Embodiment 1 is at a close position.

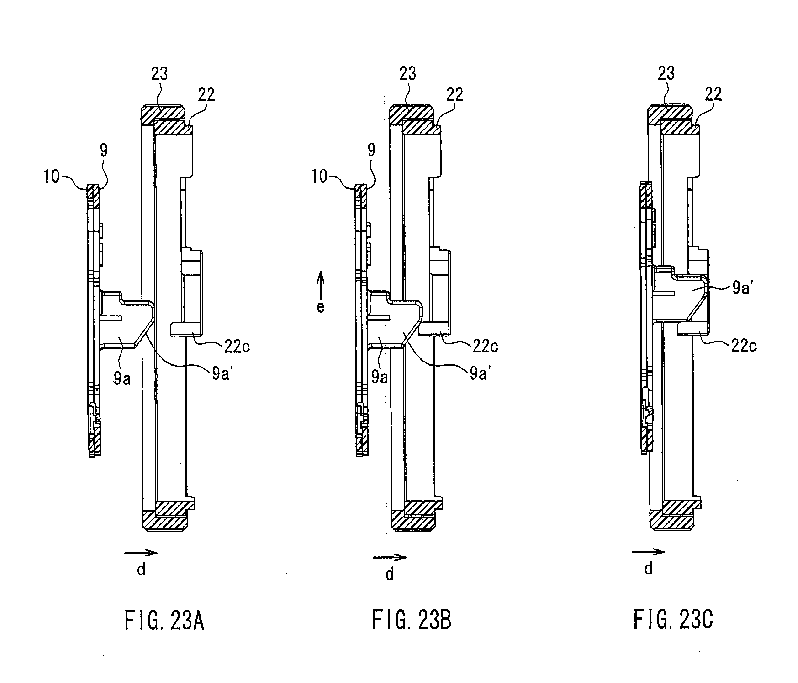

[FIG. 23] FIG. 23 includes cross-sectional views showing the interior of the lens barrier unit during an attachment of the lens barrier unit with opened lens barriers when the open/close ring position of Embodiment 1 is at a close position.

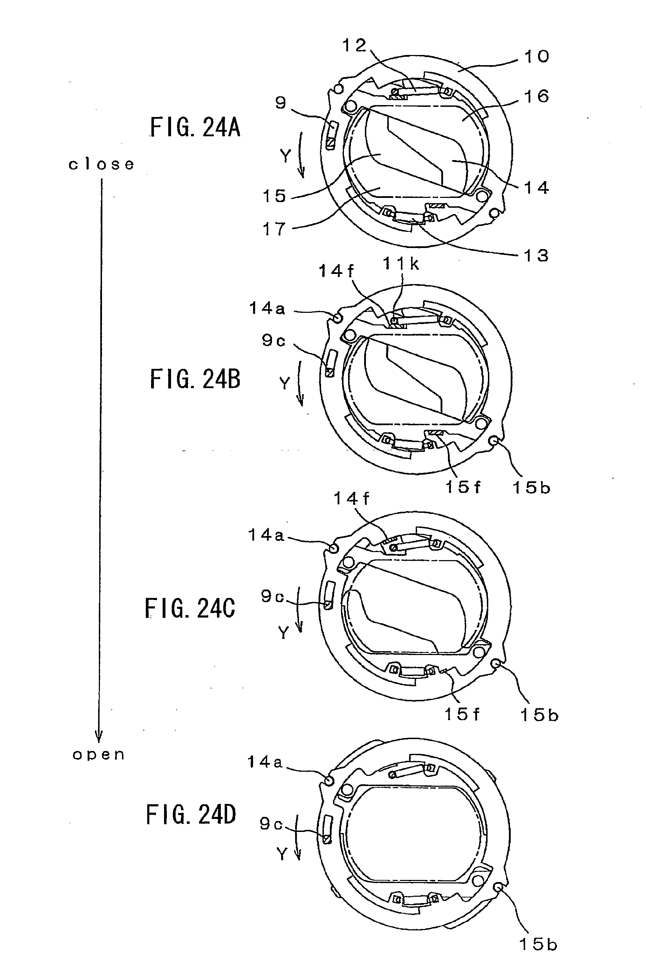

[FIG. 24] FIG. 24 includes plan views showing the moves of the respective parts, from the state where the lens barriers according to Embodiment 1 are closed to the state where the same lens barriers are opened.

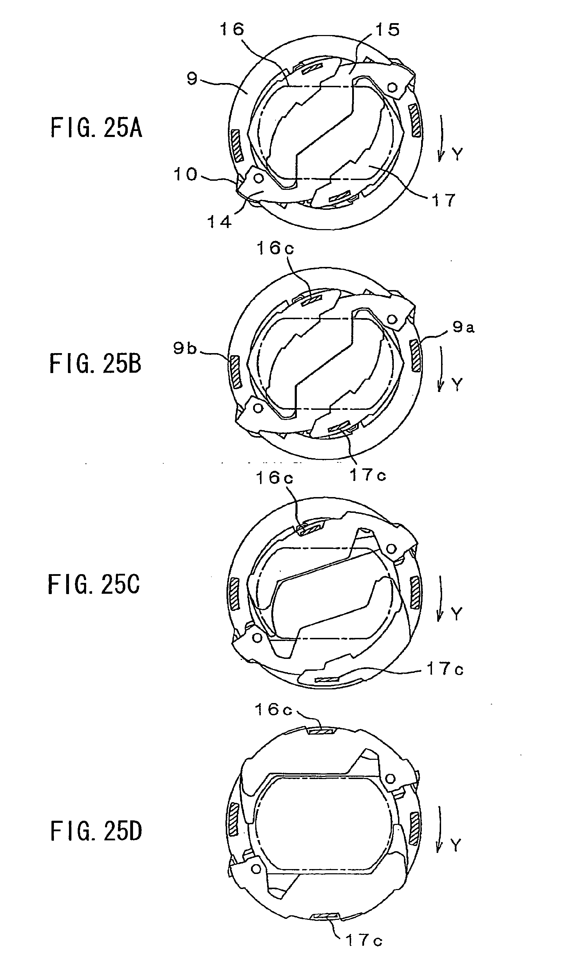

[FIG. 25] FIG. 25 includes back plan views showing the moves of the respective parts from the state where the lens barriers according to Embodiment 1 are closed to the state where the same lens barriers are opened.

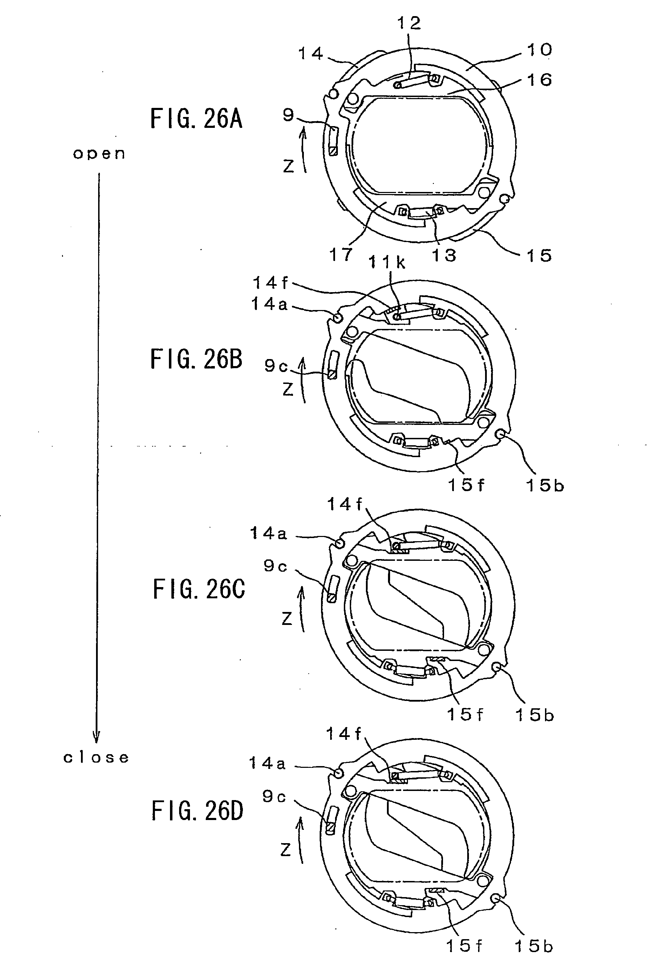

[FIG. 26] FIG. 26 includes plan views showing the moves of the respective parts from the state where the lens barriers according to Embodiment 1 are opened to the state where the same lens barriers are closed.

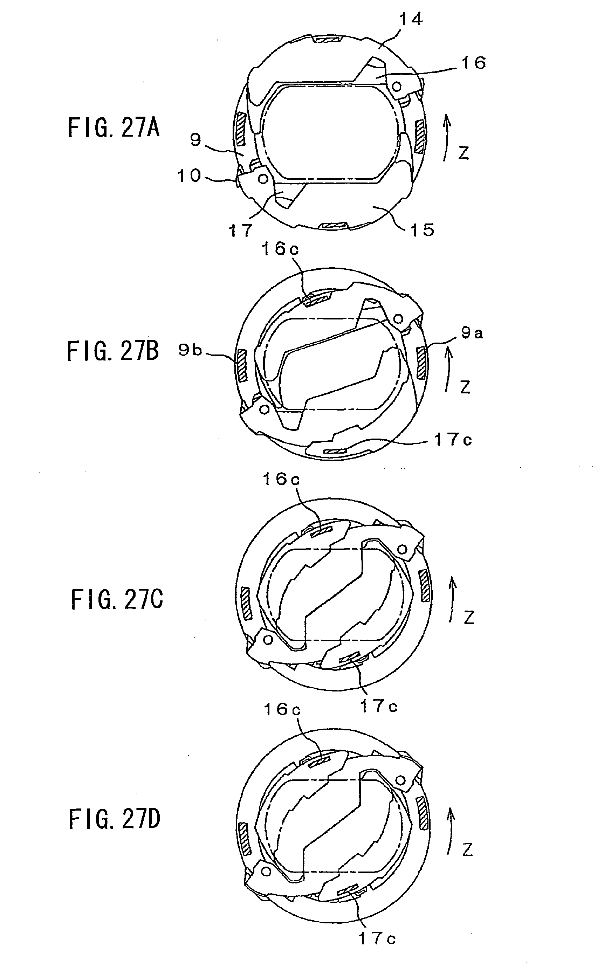

[FIG. 27] FIG. 27 includes back plan views showing the moves of the respective parts from the state where the lens barriers according to Embodiment 1 are opened to the state where the same lens barriers are closed.

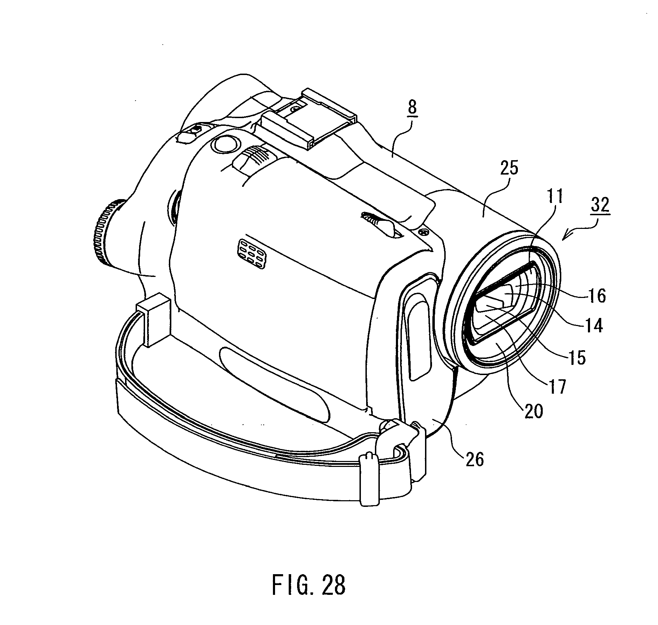

[FIG. 28] FIG. 28 is a perspective view showing a configuration of an image pickup device according to Embodiment 2.

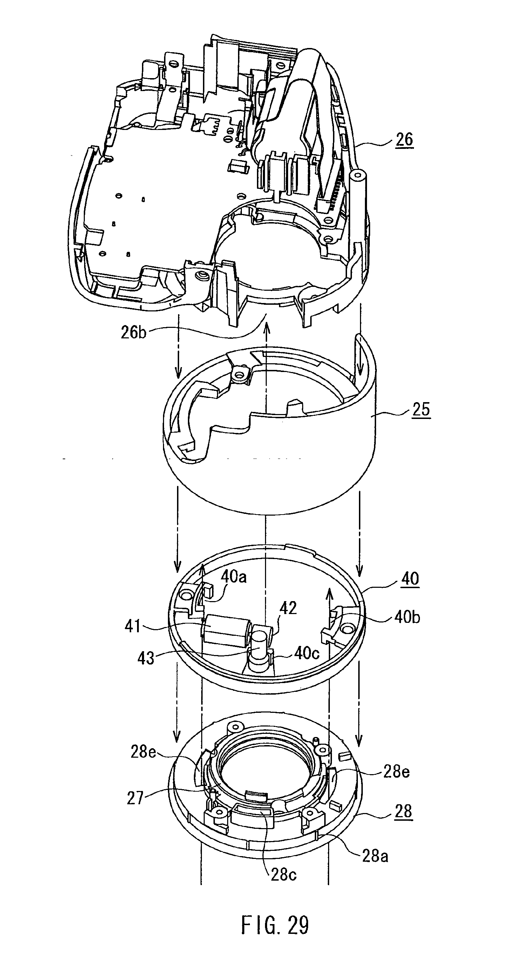

[FIG. 29] FIG. 29 is an exploded perspective view showing the area around a front cover according to Embodiment 2.

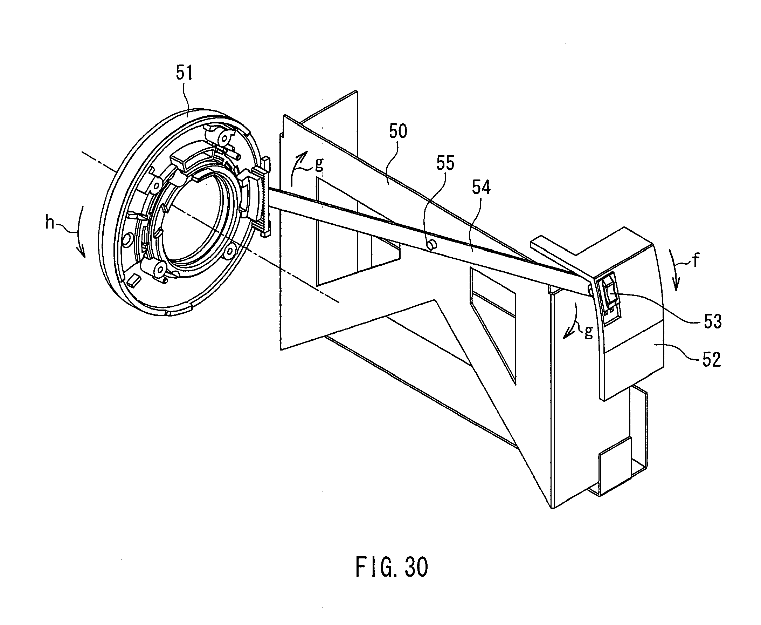

[FIG. 30] FIG. 30 is a perspective view showing a rotational mechanism of another example according to Embodiment 2.

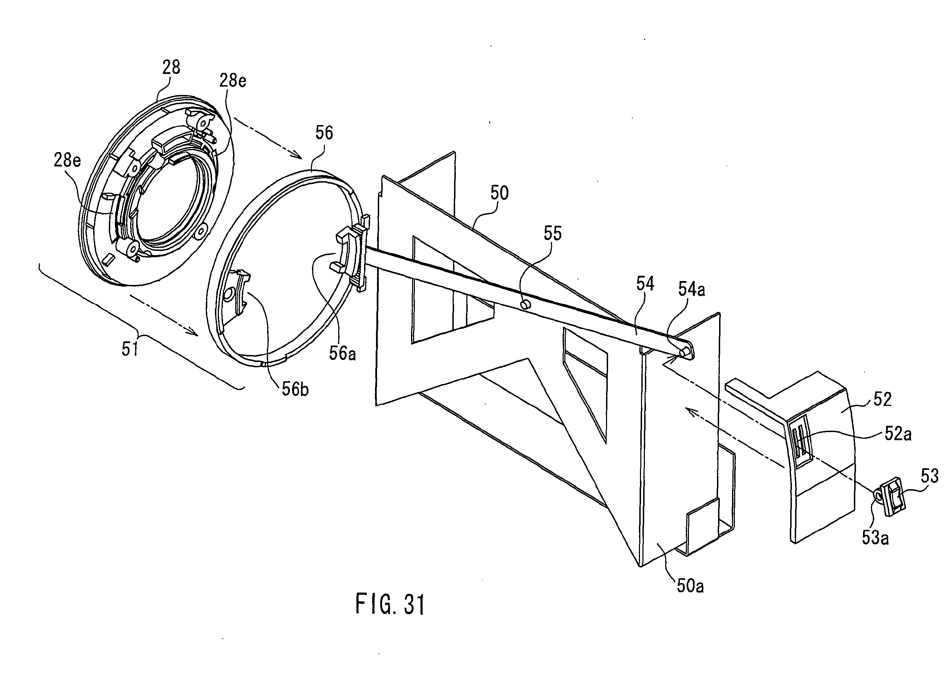

[FIG. 31] FIG. 31 is an exploded perspective view showing a rotational mechanism of another example according to Embodiment 2.
[FIG. 32] FIG. 32 is a perspective view showing an appearance of a conventional image pickup device.
[FIG. 33] FIG. 33 is a perspective view showing an appearance of a conventional image pickup device.
[FIG. 34] FIG. 34 is a perspective view showing an appearance of a conventional image pickup device.
[FIG. 35] FIG. 35 is a perspective view showing an appearance of a conventional image pickup device.

### Explanation of letters and numerals

8: video camera body
11: first barrier case
14,15,16,17: barrier blades
18: second barrier case
32: lens barrier unit

### Description of the Invention

A housing in a lens hood of the present invention includes a first barrier case member including a rotational axis with which plural lens barriers are engaged and being positioned toward a subject, and a second barrier case member engaged with the first barrier case member; where preferably, in the second barrier case member, a groove formed about an optical axis center as a central axis of an object lens of a lens barrel member and penetrating the second barrier case member about the central optical axis is provided; in a space between the first barrier case member and the second barrier case member, a barrier opening/closing switching member, which penetrates the groove and has a hook erected to be inserted-engaged freely with the groove is provided; and on a face of the second barrier case member facing the first barrier case member, a barrier-drive transferring member having a concave to be fitted with the hook that has penetrated the groove is provided.

Moreover, the housing can be contained between a covering member to cover the housing via the first barrier case member and an attaching/detaching member to be engaged firmly with the covering member, and the attaching/detaching member is engaged in a detachable manner with the tip of the lens barrel member.

Moreover, the first barrier case member and the second barrier case member can be configured to have openings about the optical axis center as the central axis; and have a mask member that is engaged firmly with the second barrier case, with which the covering member is engaged rotatably, and that has a second opening whose area is larger than that of the former opening.

Moreover, a rotational member can be provided at a site for an engagement between the lens hood device of the image pickup device of the present invention and a tip of a lens barrel member of the lens hood device. The rotational member is provided about the optical axis center as the central axis of the object lens of the lens barrel member, and moves a hook that protrudes from the groove penetrating the second barrier case member about the central axis.

Moreover, a drive member to apply a force for moving the hook along the shape of the groove can be provided further, and also an indicating member to indicate a start of application of the moving force to the drive member can be provided as well.

### (Embodiment 1)

FIG. 1 is a perspective view showing a configuration of an image pickup device containing a lens barrier unit according to Embodiment 1 of the present invention. FIGs. 2(a) and 2(b) are a front view and a partial magnified view showing an image pickup device with opened lens barriers. FIGS. 3(a) and 3(b) are front view and a partial magnified view showing an image pickup device with closed lens barriers. FIGS. 4A and 4B are perspective views of the lens barrier unit. FIGS. 5-10 are exploded perspective views and front views showing the configuration of the lens barrier unit. FIGS. 11-14 are exploded perspective views showing the configuration of a front unit having a barrier opening/closing mechanism.

As shown in FIG. 1, a video camera body 8 includes an image pickup element (a CCD image sensor or the like) for converting an incident optical signal to a video signal as an electric signal, an information storing medium on which the video signal generated by the image pickup element is recorded, and the like. The information storing medium includes a videotape or an optical disk, for example. In a case of recording a moving image on the information storing medium, an audio signal is recorded together with the video signal. The video camera body 8 is a type of an image pickup device. Though this embodiment refers to a video camera, the video camera can be replaced by a digital still camera or a silver salt film camera as long as it includes at least: an optical part such as a lens, a lens hood having a protection part such as a lens cap for protecting the lens; and a lens barrel that includes the lens and to/from which the lens hood can be attached/detached. Though a silver salt film camera does not have a structure such as a CCD image sensor to form a video signal through a photoelectric exchange, but it includes, in its image pickup part, a configuration for exposing an optical signal of a subject on a film that is packaged in general in the silver salt film camera.

Next, configurations of a barrier switch ring 9, a barrier cam ring 10 and a first barrier case 11 will be described with reference to FIG. 5.

The barrier switch ring 9 (a barrier opening/closing switching member) is engaged with a barrier-drive ring 22 included in a front unit 33.
A rotational force of the barrier-drive ring 22 is transferred to the barrier cam ring 10. The barrier switch ring 9 is configured to be rotatable over a predetermined degree in a direction indicated with an arrow A or an arrow B in FIG. 6, along a guide 11c of the first barrier case 11. The barrier switch ring 9 is connected to the front part of the barrier case by a first barrier ring spring 12 and a second barrier ring spring 13 (FIG. 7) and biased forcibly by a spring force in a direction to close the lens barriers (a direction indicated with the arrow B in FIG. 6).

Protruding parts 9a and 9b (hooks) are erected on the barrier switch ring 9 so as to be engaged with protruding parts 22d and 22c of the barrier-drive ring 22. The upper faces of the protruding parts 9a and 9b are inclined. Therefore, when the barrier switch ring 9 and the barrier-drive ring 22 are attached to each other in a state where the rotational direction phases are shifted from each other, the barrier switch ring 9 is guided by the inclined faces and rotated to the same phase as the barrier-drive ring 22 for the attachment.

The protruding part 9c is formed on the back face of the barrier switch ring 9, engaged with the groove 10c of the barrier cam ring 10 so as to transfer the rotational force of the barrier switch ring 9 to the barrier cam ring 10.

The protruding part 9d is a hook-shaped part of the barrier switch ring 9, and it can hook the first barrier ring spring 12 as shown in FIG. 7. The other end part of the first barrier ring spring 12 is hooked by a protruding part 11k of the first barrier case 11 so as to rotate and bias the barrier switch ring 9 by the spring force.

A protruding part 9e is formed at a part of the barrier switch ring 9, and it can hook the second barrier ring spring 13 as shown in FIG. 7. The other end part of the second barrier ring spring 13 is hooked by a protruding part 10d of the barrier cam ring 10 so as to rotate and bias the barrier cam ring 10 by the spring force of the second barrier ring spring 13.

Ribs 9f and 9g are parts of the barrier switch ring 9, and they are positioned a little below the main face of the barrier switch ring 9. As indicated with arrows 'a' in FIG. 5, the ribs 9f and 9g are engaged slidably with the bottoms of umbrella-shaped ribs 11g and 11h of the first barrier case 11 so as to prevent detachment of the barrier switch ring 9 and the barrier cam ring 10 from the first barrier case 11.

The barrier cam ring 10 transfers the rotation of the barrier switch ring 9 to first to fourth barrier blades 14-17 through a cam mechanism. The barrier cam ring 10 is held by the first barrier case 11 together with the barrier switch ring 9.

Ribs 10a and 10b are formed on the barrier cam ring 10. The ribs 10a and 10b are engaged with protruding shafts 14a and 15a of the third and fourth barrier blades 14 and 15 so as to operate the third and fourth barrier blades 14 and 15 through the cam drive.

A groove 10c is formed in the barrier cam ring 10 and engaged with the protruding part 9c of the barrier switch ring 9 so as to transfer the rotation of the barrier switch ring 9 to the barrier cam ring 10.

The protruding part 10d is shaped like a hook and it is arranged at a part of the barrier cam ring 10. The protruding part 10d can hook an end part of the second barrier ring spring 13 (below-described). The other end part of the second barrier ring spring 13 is hooked over the protruding part 9e of the barrier switch ring 9 so as to rotate and bias the barrier cam ring 10 by the spring force.

A groove 10e is formed in the barrier cam ring 10. The groove 10e has a size to avoid the protruding part of the front part of the barrier case at the time of opening/closing the barriers, but rotation beyond a predetermined degree is prevented by a protruding part 11f of the first barrier case 11. Thereby, in an assembly of the barrier unit, the barrier cam ring 10 will not rotate beyond a predetermined degree due to the spring force applied by the barrier ring springs 12 and 13, and thus the assembly process will not be hindered.

The first barrier case 11 composes a part of the outer case of the lens barrier unit 32.

Protruding parts 11a and 11b are pin-shaped members provided on the first barrier case 11, which are inserted respectively into holes 14b and 15b of the third barrier blade 14 and the fourth barrier blade 15, and also into holes 16a and 17a of the first barrier blade 16 and the second barrier blade 17 so as to support the barrier blades 14-17 rotatably. That is, the protruding parts 11a and 11b are rotational axes of the barrier blades 14-17.

The ribs 11c and 11d are formed along the periphery of an opening 11e of the first barrier case 11, and the ribs guide the barrier switch ring 9 and the barrier cam ring 10 during sliding.

The opening 11e is formed in the first barrier case 11 so as to pass an optical signal entering from the exterior. The dimension and shape of the opening 11e are determined so that the barrier blades 14-17 can be contained in the periphery of the opening 11e and that a light beam entering the lens will not be vignetted (i.e., no vignette will occur in the video signal).

The protruding part 11f is formed at the front part of the barrier case and engaged with the groove 10e so as to prevent the barrier cam ring 10 from rotating beyond a predetermined degree.

The ribs 11g and 11h are umbrella-shaped members formed in the vicinity of the opening 11e of the first barrier case 11, and the ribs are engaged with the ribs 9f and 9g of the barrier switch ring 9 so as to prevent detachment of the barrier cam ring 10 and the barrier switch ring 9 from the first barrier case 11.

Protruding parts 11i and 11j are formed on the outer periphery face of the first barrier case 11 and the protruding parts are fitted with protruding parts 18d and 18e formed on the outer periphery face of a second barrier case 18 (described below). The protruding parts 11i and 11j fix the first barrier case 11 and the second barrier case 18 temporarily when the barrier case unit 31 is inserted into the hood mask 20 as shown in FIG. 10.

A protruding part 11k is formed in the first barrier case 11, at which an end part of the first barrier ring spring 12 is held. The other end part of the first barrier ring spring 12 is held by the protruding part 9d of the barrier switch ring 9 so as to rotate and bias the barrier switch ring 9 by the spring force.

As shown in FIG. 7, the first barrier ring spring 12 is formed of a resilient member such as a coil spring. The first barrier ring spring 12 has circular portions at both end parts. One of the end parts is hooked by the protruding part 11k of the first barrier case 11 as indicated with arrows `b' in FIG. 7, and the other end part is hooked by the protruding part 9d of the barrier switch ring 9. Thereby, the first barrier case 11 and the barrier switch ring 9 are connected to each other. The first barrier ring spring 12 applies constantly a load (biasing force) to the barrier switch ring 9 in a direction to open the barrier blades 14-17, namely, in a clockwise direction when viewing the lens barrier unit 32 from the backside.

Hereinafter, a rotational direction of a barrier ring and a barrier blade will be indicated as a direction viewed from the backside of the lens barrier unit 32 (i.e., the face facing the video camera 8 when attached to the video camera 8).

As shown in FIG. 7, the second barrier ring spring 13 is formed of a resilient member such as a coil spring. The second barrier ring spring 13 has circular portions at both end parts. One of the end parts is hooked by the protruding part 10d of the barrier cam ring 10 as indicated with arrows 'b' in FIG. 7, and the other end part is hooked by the protruding part 9e of the barrier switch ring 9. Thereby, the barrier cam ring 10 and the barrier switch ring 9 are connected to each other. Furthermore, the second barrier ring spring 13 transfers the counterclockwise rotational force of the barrier switch ring 9 to the barrier cam ring 10 and to the barrier switch ring 9 via the second barrier ring spring 13. Since the barrier cam ring 10 and the barrier switch ring 9 are connected via the spring, when an external force other than the force from the barrier switch ring 9 is applied to the barrier cam ring 10 (for example, when the closed barrier blades 14-17 are moved by an external force), the barrier cam ring 10 can be rotated in a direction opposite to a rotation of the barrier switch ring 9.

As shown in FIG. 8, the barrier blades 14-17 are arranged at the substantial center of the optical axis of the lens barrier unit 32 so that they can be opened and closed. The barrier blades include four blades in this embodiment, but the number of blades is not limited to this example. The barrier blades 14-17 are moved in a direction substantially perpendicular to the optical axis during an opening/closing operation. The configuration of each blade will be described below.

As shown in FIG. 8, the third barrier blade 14 is one of the four barrier blades, and it is operated to open and close in accordance with the rotation of the barrier cam ring 10. The operation of opening/closing the third barrier blade 14 can be transferred to the first barrier blade 16 through a rib 14f. The third barrier blade 14 is attached to the barrier case unit 31a as indicated with arrows C.

The protruding part 14a is a pin-shaped member formed on the surface side of the third barrier blade 14 (the side facing the first barrier blade 16). The protruding part 14a is engaged with the rib 10a of the barrier cam ring 10 and allows the third barrier blade 14 to open/close when the barrier cam ring 10 rotates for a cam motion supported by the hole 14b as a fulcrum.

The hole 14b is formed in the third barrier blade 14, and the pin-shaped protruding part 11a of the first barrier case 11 is inserted and engaged in the hole 14b so that the third barrier blade 14 can rotate.

An outer periphery part 14c is a part of the outer periphery of the third barrier blade 14. Aconnection rib 16d of the first barrier blade 16 is contacted to or engaged with this outer periphery 14c so as to transfer a clockwise rotational force (a force to open the blade) to the first barrier blade 16.

A rib 14d is formed on the back face of the third barrier blade 14 (the side not facing the first barrier blade 16). In a state where the lens barrier unit 32 is attached to the video camera body 8 and the barrier blades 14-17 are closed, when an excessive force is applied to the barrier blades 14-17 from the frontal direction, the tip of the rib 14d comes in contact with the lens surface in order to prevent the barrier blades 14-17 from considerable deformation. Inherently however, since the lens barriers are for preventing scratches on the lens, the lens barriers are arranged in a normal use so as not to contact the rib 14d with the lens surface. Namely, in this configuration, the tip of the rib 14d comes in contact with the lens surface only when a force is applied to the barrier blades 14-17. It is preferable that the surface of the tip of the rib 14d is treated to reduce the contact area with the lens surface and to decrease the surface roughness, thereby preventing scratches on the lens surface at the time of contact with the lens surface.

A rib 14e is formed along the rim in the third barrier blade 14, facing the fourth barrier blade 15. The main plane of the rib 14e is configured to be lower in comparison with the back main plane of the third barrier blade 14. Thereby, the rib 14e overlaps the rib 15e and they come in contact with each other when the barrier blades 14-17 are closed so as to improve the light shielding property.

A rib 14f is formed to protrude from the surface of the third barrier blade 14 so as to be in contact with the outer periphery part 16b of the first barrier blade 16 at the time of closing the lens barrier, thereby transferring a counterclockwise rotational force (a force to close the blade) to the first barrier blade 16.

As shown in FIG. 8, the fourth barrier blade 15 is one of the four barrier blades 14-17, and it is opened/closed through the rotation of the barrier cam ring 10. The opening/closing motion of the fourth barrier blade 15 is transferred to the second barrier blade 17 through the ribs. The fourth barrier blade 15 is attached to the barrier base unit 31a as indicated with the arrows C.

A protruding part 15a is a pin-shaped member formed on the surface side of the fourth barrier blade 15 (a side facing the second barrier blade 17). The protruding part 15a is engaged with the rib 10b of the barrier cam ring 10, and thus, in accordance with the rotation of the barrier cam ring 10, it performs a cam motion with a support of a hole 15b as a fulcrum and operates the fourth barrier blade 15 to open/close. The fourth barrier blade 15 rotates about the protruding part 11b as an axis.

A hole 15b is formed on the fourth barrier blade 15. The pin-shaped protruding part 11b of the first barrier case 11 is inserted and engaged in the hole 15b so that the fourth barrier blade 15 can rotate.

An outer periphery part 15c is a part of the outer periphery of the fourth barrier blade 15. When the fourth barrier blade 15 rotates in an opening direction, the outer periphery part 15c comes in contact with a rib 17c of the second barrier blade 17 so as to transfer a clockwise rotational force (a force to open the blade) to the second barrier blade 17.

A rib 15d is formed to protrude from the back face (a side not facing the second barrier blade 17) of the fourth barrier blade 15. In a state where the lens barrier unit 32 is attached to the video camera body 8 and the barrier blades 14-17 are closed, when the barrier blades 14-17 are pressed from the frontal direction, the rib 15d comes in contact with the lens surface, and thus considerable deformation in the barrier blades 14-17 can be prevented. The rib 15d is arranged so that it does not come in contact with the lens surface in normal use, and the tip of the rib 14b comes in contact with the lens surface only when the barrier blades 14-17 are pressed from the frontal direction.

The rib 15e is formed along the rim in the fourth barrier blade 15 facing the third barrier blade 14. The main plane of the rib 15e is formed to be lower in comparison with the main plane facing the surface of the fourth barrier blade 15. Thereby, the rib 15e and the rib 14e will overlap each other when the barrier blades 14-17 are closed, and the light-shielding property can be improved.

A rib 15f is formed on the surface of the fourth barrier blade 15. By contacting the rib 15f with an outer periphery part 17b of the second barrier blade 17, a counterclockwise rotational force (a force to close the blade) is transferred to the second barrier blade 17.

As shown in FIG. 8, the first barrier blade 16 is one of the four barrier blades 14-17, and it can rotate to open and close via the ribs of the third barrier blade 14. The first barrier blade 16 rotates to open and close about the protruding part 11a. The first barrier blade 16 is attached to the barrier case unit 31a as indicated with arrows D.

The hole 16a is formed in the first barrier blade 16, into which the pin-shaped protruding part 11a of the first barrier case 11 is inserted.

The outer periphery part 16b is a part of the outer periphery of the first barrier blade 16. The rib 14f of the third barrier blade 14 comes in contact with the outer periphery part 16b so that a counterclockwise rotational force (a force to close the blade) is transferred to the first barrier blade 16.

A rib 16c is formed on the back face of the first barrier blade 16 (a face facing the third barrier blade 14). As the outer periphery part 14c of the third barrier blade 14 comes in contact with the rib 16c, a clockwise rotational force (a force to open the blade) is transferred to the first barrier blade 16.

As shown in FIG. 8, the second barrier blade 17 is one of the four barrier blades 14-17, and it can rotate to open and close through the ribs of the fourth barrier blade 15. The second barrier blade 17 rotates to open and close about the protruding part 11b. The second barrier blade 17 is attached to the barrier case unit 31a as indicated with arrows D.

A hole 17a is formed in the second barrier blade 17, into which the pin-shaped protruding part 11b of the first barrier case is inserted.

An outer periphery part 17b is a part of the outer periphery of the second barrier blade 17. As the rib 15f of the fourth barrier blade 15 comes in contact with the outer periphery part 17b, a counterclockwise rotational force (a force to close the blade) is transferred to the second barrier blade 17.

A rib 17c is formed in the back face of the second barrier blade 17 (a face facing the fourth barrier blade 15). As the outer periphery part 15c of the fourth barrier blade 15 comes in contact with the rib 17c, a clockwise rotational force (a force to open the blade) is transferred from the fourth barrier blade 15 to the second barrier blade 17.

As shown in FIG. 9, the second barrier case 18 is a part of the outer case of the lens barrier unit 32. The second barrier case 18 is fixed temporarily to the first barrier case 11 so as to form a barrier case unit 31a.

Slits 18a (grooves) are formed at two points in the second barrier case 18. Protruding parts 9a and 9b of the barrier switch ring 9 are contained in the slits 18a. In this configuration, the protruding parts 9a and 9b can move within the slits 18a in association with the rotation of the barrier switch ring 9.

An opening 18b is a path for incident light in the second barrier case 18. The dimension of the opening 18b is set so that the light entering the lens will not be vignetted. The dimension of the opening 18b is set so as to contain the barrier blades 14-17 in the vicinity of the opening 18b. Namely, the incident light will be vignetted when the opening 18b is too small; when the opening 18b is too large, no space will be left for containing the barrier blades 14-17 in the vicinity of the opening 18b. Therefore, the dimension of the opening 18b must be optimized.

A protruding part 18c is formed on the back face of the second barrier case 18 and engaged in an engagement slit 28c of a front frame 28. As shown in FIG. 14, when attaching the lens barrier unit 32 to the video camera body 8, the protruding part 18c is inserted into the engagement slit 28c and engaged so that the barrier case unit 32 can be positioned.

Protruding parts 18d and 18e are formed on the outer periphery of the second barrier case 18 and fitted with the protruding parts 11i and 11j of the first barrier case 11 as indicated with arrows E so as to temporarily fix the first barrier case 11 and the second barrier case 18 to each other.

Hooks 18f are formed at four points in the second barrier case 18. As shown in FIG. 10, the tips of the hooks 18f are hooked at slits 20b of the hood mask 20 so as to integrate barrier case unit 31 and the hood mask 20 with each other.

As shown in FIGs. 8 and 9, the barrier case unit 31 contains the barrier blades 14-17, the barrier cam ring 10, the barrier switch ring 9, and the first and second barrier ring springs 12 and 13. A barrier case unit 31a denotes the barrier case unit 31 in a state where the barrier switch ring 9, the barrier cam ring 10 and the first barrier case 11 are assembled (first assembly). A barrier case unit 31b denotes the barrier case unit 31 in a state where the first to fourth barrier blades 14-17 are assembled with the barrier case unit 31a (second assembly). The second barrier case 18 is assembled with the barrier case unit 31b to complete the barrier case unit 31. The barrier case unit 31 has a housing to contain the barrier blades 14-17 when the barrier blades 14-17 are in an open state.

As shown in FIG. 10, a hood screw 19 is fitted rotatably on the outer periphery face of an engagement wall 20d of the hood mask 20 and fitted with the hood cover 21. Therefore, the hood screw 19 rotates on the hood mask 20 integrally with the hood cover 21. A screw part 19c of a male screw is formed around the hood screw 19, so that the lens barrier unit 32 can be screwed into the video camera body 8 by rotating the hood cover 21 but without rotating the barrier case unit 31.

Concave-shaped hood cover fitting parts 19a are formed in the hood screw 19 and fitted firmly with ribs 21a of the hood cover 21 as indicated with arrows F. In this embodiment, the hood cover fitting parts 19a and the ribs 21a are formed respectively at four points.

The inner periphery face 19b corresponds to the backside of the screw part 19c of the hood screw 19.

The screw part 19c is formed as a male screw on the outer periphery face of the cylindrical portion of the hood screw 19. The screw part 19c is screwed into a female screw 28d formed on a front frame 28 of the video camera body 8 so as to attach and fix the lens barrier unit 32 to the video camera body 8.

As shown in FIG. 10, the hood mask 20 (mask member), which is provided with an opening 20c and a rib 20e (see FIG. 4), shields scattered light and prevents a flare in a video signal. Inside the hood mask 20, the barrier case unit 31 is contained. On the outer periphery of the hood mask 20, the hood screw 19 is arranged rotatably.

A rib 20a is formed to protrude from the outer periphery face of the engagement wall 20d of the hood mask 20. In this embodiment, ribs 20a are formed at four points slidably with the inner periphery face 19b of the hood screw 19.

The slits 20b are formed on the engagement wall 20d of the hood mask 20. The.hooks 18f formed at four points of the second barrier case 18 are moved as indicated with arrows G so as to be engaged with the slits 20b at four points, thereby integrating the barrier case unit 31 with the hood mask 20.

The opening 20c (second opening) is formed substantially at the center of the hood mask 20. The size and shape of the opening 20c are set so as to prevent vignetting of light entering the lens and also preventing entrance of scattered light. The opening 20c is not limited to a substantial oval as in this embodiment, but it can be elliptic or rectangular.

The engagement wall 20d is formed as a substantially cylindrical member that is erected on the main plane of the hood mask 20 and partly notched. On the outer periphery side face of the engagement wall 20d, the hood screw 19 is engaged slidably and rotatably.

As shown in FIG. 10, the hood cover 21 is arranged as a covering member on a part of the outer case for the lens barrier unit 32, and fitted to be integrated with the hood screw 19. In this embodiment, the hood cover 21 is positioned at the outermost part in the circumferential direction of the lens barrier unit 32. The user will rotate the hood cover 21 when screwing and attaching the lens barrier unit 32 to the video camera body 8. A site of the hood cover 21, which the user will grip by fingers at the time of attaching the hood camera 21 to the video camera body 8, can be roughened in the circumferential direction so as to facilitate the rotation of the hood cover 21.

The ribs 21a are formed at four points in the inner periphery of the hood cover 21 and engaged in the engagement parts 19a of the hood screw 19 so that the hood screw 19 and the hood cover 21 are integrated with each other.

As shown in FIG. 11, a barrier-drive ring (barrier-drive transferring member) is fitted with a ring cover 23. Therefore, the barrier-drive ring 22 is rotated by rotating the ring cover 23. The barrier switching ring 9 is rotated in connection to the rotation of the barrier-drive ring 22 so as to open/close the barrier blades 14-17. Moreover, a click mechanism is provided to set the positions for opening and closing the barrier blades 14-17.

A protruding part 22a is formed as a triangular concave on the inner periphery of the barrier-drive ring 22. A triangular top of a barrier ring plate spring 24 (described below with reference to FIG. 12) will fall into the concave of the protruding part 22a, so that a clicking touch can be felt at the barrier-drive ring 22.

Protruding parts 22b are formed at four points on the outer periphery of the barrier-drive ring 22, moved as indicated with arrows H so as to be engaged with ribs 23a formed at four points of the ring cover 23. Thereby, the ring cover 23 is fixed to the barrier-drive ring 22.

Protruding parts 22c and 22d are formed on the inner periphery of the barrier-drive ring 22. The protruding parts 22c and 22d have concaves with which the protruding parts 9a and 9b of the barrier switch ring 9 are fitted respectively. As a result of fitting between the protruding parts 9a, 9b and the concaves, the rotational force of the barrier switch ring 22 can be transferred to the barrier switch ring 9.

An inner periphery face 22e denotes an inner periphery face of the barrier-drive ring 22, and it slides with the ribs provided at four points of the outer periphery of the front frame 28.

As shown in FIG. 11, the ring cover 23 (rotational member) is a part of the outer case of the front unit 33, and it is fitted with the barrier-drive ring 22 so as to be integrated. The ring cover 23 is arranged rotatably about the optical axis in the circumferential direction. The barrier blades 14-17 can be opened/closed as a result of rotating the ring cover 23 by a predetermined angle by the user with the finger in a state where the lens barrier unit 32 is attached to the video camera body 8.

The ribs 23a are formed at four points of the inner periphery of the ring cover 23, and fitted with the ribs 22 formed at four points on the outer periphery of the barrier-drive ring 22 so as to fix the ring cover 23 to the barrier-drive ring 22.

As shown in FIG. 12, the barrier ring plate spring 24 is formed by folding a spring of an resilient thin plate, and as indicated with arrows K, the barrier ring plate spring 24 is fixed at the end parts to grooves 26a of a front case 26. As indicated with an arrow J, the protruding part 22a of the barrier-drive ring 22 is in contact with the barrier ring plate spring 24. Furthermore, since the triangular top of the barrier ring plate spring 24 falls into the concave of the protruding part 22a of the barrier-drive ring 22, a click touch is felt at the barrier-drive ring 22. This click touch serves to control the barrier-drive ring 22 to be stopped at either the "OPEN" position as shown in FIG. 2(b) or the "CLOSE" position as shown in FIG. 3(b).

As shown in FIG. 12, a lens cover 25 is a part of the outer case of the front unit 33. The lens cover 25 is integrated with a front case 26 as indicated with an arrow L, and then interposed and fixed between the front case 26 and the front frame 28 as indicated with an arrow I. The lens cover 25 is an example of a lens barrel member.

As shown in FIG. 12, the front case 26 is a part of the outer case of the front unit 33. The lens cover 25, the barrier-drive ring 22 and the ring cover 23 are attached and fixed in the front case 26 substantially about the optical axis position of the lens.

As shown in FIG. 13, a lens damper 27 is fixed to the front frame 28 and it relieves the shock applied to the lens ball of the lens unit at the inner periphery. Though the lens damper 27 is made of a rubber according to this embodiment, any other materials can be used as long as the shock can be relieved.

As shown in FIG. 13, the front frame 28 is a part of the outer case of the front unit 33. The front frame 28 is attached to the front face of the front case 26, and on the outer periphery part, the barrier-drive ring 22 is held rotatably. The lens damper 27 is attached to the center of the front frame 28, and the lens damper 27 is interposed and fixed between the front frame 28 and the front case 26.

Ribs 28b are formed at two points of the back face of the front frame 28. During a rotation, these ribs 28b come in contact with the side faces of the protruding parts 22c and 22d formed on the inner periphery of the barrier-drive ring 22, thereby controlling the rotation of the barrier-drive ring 22.

The engagement slit 28c is formed on the back face of the front frame 28, which is surrounded with a fence rib. The engagement slit 28c can be positioned so that the protruding part 18c (see FIG. 9) of the second barrier case 18 is inserted at the time of attaching the lens barrier unit 32 so as to prevent rotation of the barrier case unit 31.

The female screw part 28d is screwed with the male screw part 19c of the hood screw 19 at a time of attaching the lens barrier unit 32 to the video camera body 8.

Slits 28e are formed at two points to penetrate from the surface to the back face of the front frame 28, through which the protruding parts 22c and 22d of the barrier-drive ring 22 and the protruding parts 9a and 9b of the barrier switch ring 9 are engaged with each other.

As shown in FIG. 13, a screw 30 is an M16 screw for example, and it fixes the front frame 28 to the front case 26 as indicated with arrows M.

As shown in FIG. 13, the front unit 33 includes a barrier-drive ring 22. By attaching the lens barrier unit 32 to the front frame 28, the barrier blades 14-17 can be opened/closed.

As shown in FIG. 14, the lens barrier unit 32 can be attached/detached to/from the front frame 28. The lens barrier unit 32 is configured by fitting and integrating the barrier case unit 31 with the hood mask 20 as shown in FIG. 10, to which the hood screw 19 and the hood cover 21 are attached.

Operations of the lens hood device and the image pickup device configured as mentioned above will be described below.

First, operations for attaching/detaching the lens barrier unit 32 to/from the video camera body 8 will be described.

FIG. 15 is a front view of a lens barrier unit. FIG. 16 is a cross-sectional view of the lens barrier unit attached to the video camera body, taken along the line "α-α" in FIG 15. FIG. 17 is a cross-sectional view showing the video camera body to which a conventional lens hood and further a conventional lens cap are attached. FIG. 18 is a cross-sectional view showing the video camera body from which the lens barrier unit is detached.

In FIGs. 14 and 18, the lens barrier unit 32 is moved in a direction indicated with an arrow N with respect to the front frame 28 composing a part of the front case (a face facing a subject at shooting) of the video camera body 8, and attached so that the optical axis of the lens barrier unit 32 will correspond substantially to the optical axis of the front frame 28. At this time, the protruding part 18c formed to protrude from the back face of the lens barrier unit 32 is inserted into the engagement slit 28c formed on the front frame 28 and engaged with the engagement slit 28c as indicated with an arrow P. Accordingly, the lens barrier unit 32 is positioned, and furthermore, the protruding parts 9a and 9b formed at two points to protrude from the lens barrier unit 32 are engaged in the slits 28e of the front frame 28 as indicated with arrows Q.

Next, the hood cover 21 of the lens barrier unit 32 is rotated in the direction indicated with an arrow R so that the screw part 19c formed on the back face of the lens barrier unit 32 and the female screw part 28d of the front frame 28 can be screwed in each other. FIGS. 15 and 16 show completion of the screwing.

In this configuration, the hood screw 19 of the lens barrier unit 32 is rotated by the rotation of the hood cover 21, but the barrier case unit 31 and the hood mask 20 are not rotated. That is, the hood mask 20 serving as a lens hood has the opening 20c of a substantial oval shape, and an opening formed in the vicinity of the optical axis of the lens barrier unit 32 is also shaped as a substantial oval. Therefore, in a case of screwing and attaching the lens barrier unit 32 to the front frame 28, the inherent function as a lens hood cannot be provided when the substantially oval opening in the rotational direction is not positioned normally. The configuration according to this embodiment can hold the position of the hood mask 20 in the rotational direction at the time of screwing the lens barrier unit 32.

As shown in FIG. 15, when viewed from the front of the lens barrier unit 32, the upper and lower parts of a lens ball 29 are shielded by the hood mask 20 so as to limit the quantity of light. Moreover, as shown in the side view of FIG. 16, the thickness in the optical axis direction can be reduced in comparison with the conventional configuration as shown in FIG. 17. Specifically, in the conventional configuration as shown in FIG. 17, the lens hood 4 is attached to the front part of the front frame 28 and the lens cap 5 is attached to the front part of the lens hood 4. As a result, the thickness for the lens cap 5 and the lens hood 4 will be increased necessarily. At contrast, in this embodiment, the lens barrier unit 32 alone having the substantially same thickness as that of the conventional lens cap 5 has both configurations for a lens cap and a lens hood, and thus the dimension in the thickness direction can be reduced.

For clearly indicating the respective units for this embodiment and the conventional technique, FIG. 18 shows the respective units of this embodiment in a dissociated state, while FIG. 19 shows the respective units of the conventional technique in a dissociated state. In FIGs. 18 and 19, the respective units are moved as indicated with arrows N, T and U so as to be attached to each other.

Next, when detaching the lens barrier unit 32 from the video camera body 8, the hood cover 21 in the lens barrier unit 32 in a state as shown in FIGs. 15 and 16 is rotated in a direction as indicated with an arrow S, so that the screwing between the screw part 19c formed on the back face of the lens barrier unit 32 and the female screw part 28d of the front frame 28 can be relieved. When the screwing is released completely, the lens barrier unit 32 is moved in a direction opposite to the N direction, so that the engagement between the protruding part 18c formed to protrude from the back face of the lens barrier unit 32 and the engagement slit 28c formed on the front frame 28, and also the engagement between the two protruding parts 9a, 9b formed to protrude from the lens barrier unit 32 and the slit 28e of the front frame 28 can be released respectively, thereby detaching the lens barrier unit 32 from the front frame 28.

Next, the operations for opening/closing the lens barriers will be described.

As shown in FIG. 1, in a state where the lens barrier unit 32 is attached to the video camera body 8, the ring cover 23 can be rotated over a predetermined angle.

Furthermore, as shown in FIGs. 2(b) and 3(b), a cursor 90 is formed on the ring cover 23. A CLOSE mark 91 is provided for visually identifying for the user the state where the lens barrier is closed, and an OPEN mark 92 is provided for visually identifying for the user the state where the lens barrier is opened. The CLOSE mark 91 is not limited to the expression with a symbol. The OPEN mark 92 is not limited to the inscription as "OPEN" written in English.

In FIGS. 2 and 3, when the ring cover 23 is rotated in the circumferential direction, the relative position of the cursor 90 with respect to either the CLOSE mark 91 or the OPEN mark 92 will change. That is, by rotating the ring cover 23 to adapt the cursor 90 to the CLOSE mark 91 as shown in FIG. 3(b), the lens barrier can be closed as shown in FIG. 3(a).

Alternatively, by rotating the ring cover 23 to adapt the cursor 90 to the OPEN mark 92 as shown in FIG. 2(b), the lens barrier can be opened as shown in FIG. 2(a). FIG. 2(a) shows an opened lens barrier, where the lens ball 29 can be observed visually when viewing from the front of the video camera body 8. The operations of the internal functions in opening/closing the barrier blades 14-17 will be described later.

Next, a safety mechanism at the time of attaching the lens barrier unit to the video camera body 8 will be described.

FIGs. 20-23 show the internal operations at the time of attachment of a lens barrier unit. FIGS. 20(a), 21(a) and 22(a) are exploded perspective views of the unit for expressing clearly the operations of the internal mechanisms of the lens barrier unit 32 and the front frame 28. Though the respective units are drawn separately in the figures, the units are engaged with or detached from each other actually. FIGs. 20(b), 21(b) and 22(b) are perspective views showing the marks formed in the vicinity of the front frame 28. Since the open/close state of the barrier blades of the barrier case unit 32 and the open/close state of the barrier-drive ring facing the front frame 28 correspond to each other in FIGS. 20 and 21, attachment/detachment can be carried out according to the attaching/detaching operations as mentioned above. FIG. 23A shows a state where the lens barrier unit 32 is not attached yet to the video camera body 8. FIG. 23B shows a state where the protruding part 22c and the protruding part 9a of the barrier switch ring 9 are in contact with each other, and FIG. 23C shows a state where the protruding part 9a slides to be engaged with the protruding part 22c.

As shown in FIG. 22, when the barrier-drive ring 22 serves to attach the lens barrier unit 32 with the barrier blades 14-17 in an open state to the video camera body 8 where the cursor 90 is at the position of the CLOSE mark 91 (the reverse phase with respect to the barrier switch ring 9), the lens barrier unit 32 (not shown) packaged with the barrier switch ring 9 or the like is moved from the unattached state as shown in FIG. 23A in the direction indicated with arrows 'd', and the protruding part 9a' is inserted into the barrier-drive ring 22 as shown in FIG. 23B.

When the protruding part 9a is inserted into the position as shown in FIG. 23B, an inclined face 9a' comes in contact with the protruding part 22c of the barrier-drive ring 22. When the lens barrier unit 32 is moved further in the direction indicated with the arrows 'd', the inclined face 9a' and the protruding part 22c slide with each other so that the protruding part 9a is guided in a direction indicated with an arrow 'e'. By guiding the protruding part 9a in the 'e' direction, the barrier switch ring 9 is rotated in the circumferential direction. With the rotation of the barrier switch ring 9 in the circumferential direction, the barrier blades 14-17 get closed.

Next, by moving the lens barrier unit 32 further in the 'd' direction from the state as shown in FIG. 23B, the protruding part 9a is guided further in the 'e' direction and fitted with the barrier-drive ring 22 as shown in FIG. 23C. Thereby, the barrier blades 14-17 are closed fully and the lens barrier unit 32 is attached to the video camera body 8.

The barrier blades 14-17 are biased by the first barrier ring spring 12 constantly in the opening direction. In a state where the lens barrier unit 32 is not attached to the video camera body 8, the barrier blades 14-17 are opened constantly.

Next, the operations for opening/closing the barrier blades 14-17 will be described.

FIGs. 24 and 25 show the moves of the respective parts from the state where the lens barrier is closed to the state where the same lens barrier is opened. FIG. 24 is a plan view showing the lens barrier unit 32 from the surface side, and FIG. 25 is a plan view showing the same member from the backside. In the figures, the dashed line indicates the opening of the hood mask 20. FIGS. 26 and 27 are state diagrams showing the moves of the respective parts, from the state where the lens barrier is opened to the state where the same lens barrier gets closed. The following explanation is focused on the operations of the barrier switch ring 9, the barrier cam ring 10 and barrier blades 14-17 among the members composing the lens barrier unit (some configurations in the figures are simplified).

First, FIGs. 24A and 25A show the barrier blades 14-17 closed fully At this time, the first barrier ring spring 12 is stretched at the maximum, and the barrier switch ring 9 is rotated fully to the CLOSE position (i.e., the cursor 90 of the barrier-drive ring 10 is positioned corresponding to the CLOSE mark 91 of the lens cover 25).

The second barrier ring spring 13 in the state as shown in FIGs. 24A and 25Ais stretched a little more than the states as shown in the remaining figures. The reason is that, the barrier blades 14-17 are closed fully and the barrier cam ring 10 that is connected directly to these barrier blades 14-17 is at a rotation control position, but the barrier switch ring 9 is configured to be further rotatable. Thereby, the barrier blades 14-17 are allowed to rotate sufficiently, so that the barrier blades 14-17 can be closed fully. Moreover, since the first and second barrier blades 16 and 17 are in contact with the protruding parts 14f and 15f of the third and fourth barrier blades 14 and 15, they are controlled constantly in the closing direction. For the third and fourth barrier blades 14 and 15, the positions are controlled by the barrier cam ring 10.

Next, when the ring cover 23 (see FIG. 1) is rotated a little from the state as shown in FIGS. 24A and 25A, the barrier switch ring 9 alone is rotated in a direction as indicated with arrows Y so as to enter the state as shown in FIGs. 24B and 25B. In the state as shown in FIGS. 24B and 25B, stretching of the first barrier ring spring 12 is reduced corresponding to the rotation of the barrier switch ring 9. The protruding part 9c formed on the back face of the barrier switch ring 9 is at a position just before a contact with the barrier cam ring 10. Since the barrier switch ring 9 is rotated in the opening direction, stretching of the second barrier ring spring 13 is reduced corresponding to the rotation of the barrier switch ring 9. However, since the protruding part 9c controls the rotation of the barrier cam ring 10, the second barrier ring spring 13 is subjected to some load, and thus it is stretched to its original length. Since the barrier cam ring 10 does not move at all at the time as shown in the figure, there is no change in the positions of the barrier blades 14-17.

Next, the ring cover 23 (see FIG. 1) is rotated a little from the state as shown in FIGs. 24B and 25B so as to enter the state as shown in FIGS. 24C and 25C. In the state as shown in FIGS. 24C and 25C, stretching of the first barrier ring spring 12 is reduced further from the state as shown in FIGS. 24B and 25B, corresponding to this rotation. The barrier cam ring 10 is forced to rotate to a predetermined position since the protruding part 9c on the back face of the barrier switch ring 9 comes in contact with the end faces of the slits of the barrier cam ring 10. Therefore, the third barrier blade 14 and the fourth barrier blade 15 that are connected directly to the barrier cam ring 10 are rotated similarly to predetermined positions.

The first barrier blade 16 and the second barrier blade 17 are distinguished from each other in the positional relationship. That is, the first barrier blade 16 constantly tries to rotate in the closing direction due to its own weight, and the third barrier blade 14 and the first barrier blade 16 are overlapped with each other as shown in FIG. 24C. Furthermore, the rotation of the first barrier blade 16 is controlled since the rib 16c formed on the back face and the third barrier blade 14 are in contact with each other as shown in FIG. 25C. Therefore, in this configuration, the first barrier blade 16 will be opened at the same time that the third barrier blade 14 is opened.

On the other hand, the second barrier blade 17 constantly tries to rotate in the opening direction due to its own weight, and at the same time, since the second barrier blade 17 and the protruding part 15f come in contact with each other, the rotation of the second barrier blade 17 in the opening direction is controlled. Therefore, in this configuration, the second barrier blade 17 will be opened at the same time that the fourth barrier blade 15 is opened.

The first and second barrier blades 16 and 17 do not synchronize fully with the motions of the third and fourth barrier blades 14 and 15, but an asynchronous and freely rotatable range exists.

Next, the ring cover 23 (see FIG. 1) is rotated further from the state as shown in FIGs. 24C and 25C so as to enter the state as shown in FIGS. 24D and 25D. As shown in FIGs. 24D and 25D, when the lens barrier is shift to a full-open state, the stretching of the first barrier ring spring 12 is minimized, and the barrier switch ring 9 is rotated fully to the OPEN position (i.e., the cursor 90 of the barrier-drive ring 22 is at the position of the OPEN mark 92). Further, the first barrier blade 16 and the second barrier blade 17 are controlled in the opening direction by the protruding parts 16c and 17c of the third barrier blade 14 and the fourth barrier blade 15. The positions of the third barrier blade 14 and the fourth barrier blade 15 are controlled by the barrier cam ring 10.

The operations for closing the barrier blades 14-17 are shown in FIGs. 26 and 27, but the explanation will be omitted since the operations are reverse movements of the opening operations as described above.

As mentioned above, according to this embodiment, since a lens barrier including the four barrier blades 14-17 is arranged on the dead space between the lens hood and the lens, both functions, i.e., the lens protection and the functions of the lens hood can be provided without changing the size of the conventional lens cap.

Furthermore, since the lens barrier unit 32 is configured to be attachable/detachable by screwing with respect to the video camera body 8, the risk that the lens barrier unit 32 is detached from the video camera body 8 due to a shock can be reduced. For example, even if the video camera body 8 is dropped accidentally, the risk of detachment of the lens barrier unit 32 can be lowered, and thus the lens can be protected certainly from flaws/scratches.

Furthermore, since the barrier blades 14-17 are contained in the lens barrier unit 32 during a shooting with the video camera body 8, the lens barrier will not inhibit the shooting, and thus the shooting can be carried out favorably.

Moreover, since the lens barrier is opened/closed by the barrier-drive ring 22 formed in the video camera body 8, labor and time required during a use of the lens barrier and during a shooting can be reduced considerably. That is, in a conventional use of a video camera body, the lens cap is detached from the front frame and the lens cap is engaged with a holding protrusion in order to complete a preparation for a shooting; in this embodiment, preparation for shooting is completed only by rotating the barrier-drive ring 22.

Furthermore, since the barrier blades 14-17 are configured to open constantly (containing) in a state where the lens barrier unit 32 is detached from the video camera body 8, dust or the like can be prevented from adhering on the barrier blades 14-17 at the time of shooting without attaching the lens hood.

That is, in a case of using the lens barrier unit 32 in a state detached from the video camera body 8 (when not using the function of the lens hood), if the barrier blades 14-17 are in closed states, dust or the like can adhere on the surfaces (especially the faces facing the lens) of the lens blades 14-17. When the lens barrier unit 32 with adhesion of dust or the like is attached again to the video camera body 8, the dust may adhere on the lens.
According to the configuration in this embodiment, since the barrier blades 14-17 are contained at any time when the lens barrier unit 32 is detached from the video camera body 8, adhesion of dust or the like on the barrier blades 14-17 can be prevented.

### (Embodiment 2)

FIG. 28 is a perspective view showing a configuration of an image pickup device according to Embodiment 2. FIG. 29 is an exploded perspective view showing a configuration of members at the front portion of an image pickup device according to Embodiment 2. As to the configuration of Embodiment 2 as shown in FIG. 28, components assigned with the same numbers as in the components in Embodiment 1 are regarded as functioning and operating similarly, and the explanation will be omitted.

The configuration as shown in FIG. 28 is different from the configuration of Embodiment 1 in that the ring cover 23 in FIG. 1 and the CLOSE mark 91 and the OPEN mark 92 as shown in FIG. 2(b) are not provided.

As shown in FIG. 29, a notch 26b is formed in a front case 26 in order to accommodate a motor 41 and a two-stage gear 43 (below described).

A ring 40 is provided rotatably between a lens cover 25 and a front frame 28. The ring 40 has an engagement part 40a with which a protruding part 9a inserted into a slit 28a is engaged. The protruding part 9a is integrated with the barrier switch ring 9 as shown in FIG. 5, and protrudes from the back face of the lens barrier unit 32 as shown in FIG. 4. Moreover, a dentate part 40c is formed in the ring 40 so as to engage with one of dentate parts of the two-stage gear 43 (below described).

The motor 41 as a driving member is arranged inside the notch 26b formed in the front case 26 and fixed to the front case 26. A worm gear 42 is provided to the output shaft of the motor 41 and rotated together with the drive of the motor 41. Though not shown in the figure, when a power source is turned on by a power switch as an operation member carried by the video camera body 8, the motor 41 is charged with electricity. The motor 41 is not limited to the configuration to be charged in accordance with operations of the power switch.

The two-stage gear 43 includes two gears that have different gear ratios and that are arranged coaxially and integrally. One of the gears of the two-stage gear 43 is engaged with the worm gear 42, and the other gear is engaged with the dentate part 40c. The two-stage gear 43 is arranged rotatably in the front case 26.

For explanation, the motor 41, the worm gear 42 and the two-stage gear 43 are drawn in the vicinity of the ring 40 in FIG. 29. In FIG. 29, the positional relationship between the ring 40 and the motor 41, the worm gear 42 and the two-stage gear 43 indicates the state after assembling the resp ective units.

Hereinafter, the operations of the image pickup device in Embodiment 2 will be described.

As shown in FIG. 29, the front case 26, the lens cover 25, the ring 40 and the front frame 28 provided with a lens damper 27 are attached to and integrated with each other. Here, the ring 40 is arranged rotatably in the circumferential direction between the lens cover 25 and the front frame 28. The motor 41 and the two-stage gear 43 are fixed to the front case 26. The thus integrated unit is fixed to the video camera body 8 as shown in FIG. 28.

In FIG. 28, a male screw formed in the lens barrier unit 32 is screwed into a female screw formed in the front frame 28 (see FIG. 29) fixed to the front face of the lens cover 25, thereby attaching the lens barrier unit 32 to the video camera body 8.

When the lens barrier unit 32 is attached to the video camera body 8, usually as shown in FIG. 28, the respective barrier blades 14-17 are in closed states.

Next, in a case of opening the respective barrier blades 14-17, the motor 41 is applied with a driving current so as to enter a driving state, and thus the worm gear 42 fixed to the output shaft of the motor 41 is rotated. Due to the rotation of the worm gear 42, the two-stage gear 43 engaged with the worm gear 42 is rotated. When the two-stage gear 43 is rotated, the driving force is transferred to the dentate part 40c that is engaged with the other gear of the two-stage gear 43, and thus the ring 40 is rotated in the circumferential direction.

When the ring 40 is rotated in the circumferential direction, the protruding parts 9a and 9b (see FIG. 5 for example) of the lens barrier unit 32 engaged with the engagement parts 40a and 40b of the ring 40 are moved in the circumferential direction in accordance with the rotation of the ring 40. As a result of the move of the protruding parts 9a and 9b, the respective barrier blades 14-17 arranged in the lens barrier unit 32 are rotated to open respectively. When the respective barrier blades 14-17 are rotated to the full-open position, the drive of the motor 41 is stopped.

In a case of closing the respective barrier blades 14-17, the motor 41 is driven to reverse the worm gear 42. Here, "reverse" denotes a rotation in the reverse direction with respect to the rotational direction of the gears and the ring in a case of opening the barrier blades 14-17. When the worm gear 42 is reversed, the two-stage gear 43 also is reversed, and the ring 40 engaged with the two-stage gear 43 is reversed as well. When the ring 40 is reversed, the protruding parts 9a and 9b of the lens barrier unit 32 engaged with the engagement parts 40a and 40b are moved in a reverse direction with respect to the opening of the barrier blades 14-17. When the protruding parts 9a and 9b are moved, the barrier blades 14-17 arranged in the lens barrier unit 32 are rotated respectively and closed. When the respective barrier blades 14-17 are rotated to the full-close position, the drive of the motor 41 is stopped.

Regarding the operations for opening/closing the barrier blades 14-17 in accordance with the move of the protruding parts 9a and 9b have been explained in Embodiment 1, and here, the explanation will be omitted.

As mentioned above, according to this embodiment, the operations for opening/closing the respective barrier blades 14-17 are carried out by a motor or the like, and thus the user is not required to open the lens barriers by hand, and thus the operability can be improved.

Moreover, since the lens barrier unit 32 is configured to be attachable/detachable to/from the video camera body 8, and since motor-driven opening/closing mechanisms such as the motor 41 and the two-stage gear 43 are arranged to face the video camera body 8, even if the motor-driven opening/closing mechanism is broken in a state where the lens barrier is closed, the lens can be exposed by taking the lens barrier unit 32 out from the video camera body 8, therefore a normal shooting can be carried out.

The configuration for rotating-driving the ring 40 is not limited to the motor 41 as described in Embodiment 2, but such a configuration can be provided also by a well-known driving mechanism.

Hereinafter, other examples for the ring rotation mechanism will be explained.

FIG. 30 is a perspective view showing a configuration of a rotational mechanism to be included in a video camera body. FIG. 31 is an exploded perspective view showing the rotational mechanism. Components not requiring explanation are not drawn in FIGs. 30 and 31 for the sake of clarity.

In FIG. 30, a frame 30 holds a tape-driving mechanism and various circuit boards in the video camera body. A pin 55 is erected on the side face of the frame 50, and a link lever 54 is supported by the pin 55 rotatably.
One end part of the link lever 54 (front side of the video camera body) is supported on the outer periphery face of a ring 56 of a ring unit 51. A pin 54a is erected on the other end part of the link lever 54 (back side of the video camera body). On the rear face 50a of the frame 50, a rear case 52 is fixed. The rear case 52 is a part of the outer case backward (videographer side) of the video camera body. A slit 52a is formed on the rear case 52. In the vicinity of the slit 52a, a switch 53 as an indicator is arranged so as to be slidable in a direction indicated with an arrow `f' or the reverse direction, guided by the slit 52a. The switch 53 corresponds to a power switch for the video camera body, for example. By sliding the switch 53 from the state as shown in FIG. 30 in the direction indicated with the arrow 'f', the power source in the body can be activated. It should be noted that the switch 53 is not limited to a power switch. A hole 53a is formed on a back face of the switch 53 corresponding to the operation face. The hole 53a passes through the slit 52a so as to be fitted rotatably with the pin 54a of the link lever 54.

The ring unit 51 includes a front frame 28 (configured as in FIG. 29) and the ring 56, and the ring 56 is arranged rotatably at the outer periphery part of the front frame 28. Though not shown in the figure, the ring unit 51 is fixed to the front case 26 (see FIG. 29). Engagement parts 56a and 56b are formed on the ring 56, with which the protruding parts 9a and 9b (see FIG. 5, for example) formed on the lens barrier unit 32 are engaged in a state where the lens barrier unit 32 (see FIG. 29) is attached.

The operations will be described below.

FIG. 30 relates to a video camera body not being in use, where the lens barrier unit 32 is attached to the surface side of the front frame 28. As a result of attaching the lens barrier unit 32, the protruding parts 9a and 9b are engaged with the engagement parts 56a and 56b (see FIG. 31).

When the switch 53 is slid in the direction indicated with the arrow 'f' in this state, the power source of the video camera body is turned on. Furthermore, since the hole 53a and the pin 54a are fitted with each other, the link lever 54 is rotated about the pin 55 in a direction indicated with an arrow 'g'. When the link lever 54 is rotated, the ring 56 fitted with the other end part of the link lever 54 is rotated about the optical axis (dashed line) in a direction indicated with an arrow 'h'. When the ring 56 is rotated, the protruding parts 9a and 9b (see FIG. 5) engaged with the engagement parts 56a and 56b are moved to open the lens barriers in the lens barrier unit 32. During the rotation of the ring 56, the front frame 28 does not rotate.

By sliding the switch 53 in the reverse direction to the direction indicated with the arrow 'f', the operations are carried out reversibly so as to close the lens barriers in the lens barrier unit 32.

According to the configuration as shown in FIGS. 30 and 31, a motor for opening/closing the lens barriers is not required, thereby reducing the cost and saving energy.

Furthermore, due to the configuration of opening/closing the lens barriers in connection with the movements of the operation parts (such as a power source switch) packaged in the video camera body, there is no need to provide a particular operation part for opening/closing the lens barriers, thereby reducing the cost and decreasing the size of the video camera body.

Though the explanation in this embodiment refers to a structural example including a pair of engagement parts (40a and 40b; 56a and 56b) at the ring 40 and the ring 56, there is no particular problem in a configuration including only any one of the engagement parts to be engaged with either of the protruding parts 9a or 9b. Furthermore, though the explanation refers to a structural example where both the ring 40 and the ring 56 are shaped to be cylindrical, according to another applicable configuration, only the part including one of the engagement parts (40a and 56a for example) is cylindrical but the remaining part is notched. This configuration is preferred for a case where a drive by the motor 41 is applied as shown in FIG. 29 for example, since an engagement between a drive power source and the ring 40 can be prevented by arranging the drive power source such as the motor 41 in a notched portion of the ring 40.

### Industrial Applicability

The present invention is provided by configuring a lens cap for protecting a lens so as to function as a lens hood as well, and the configuration can be applied preferably to a video camera, a digital still camera, a silver salt film camera and the like.

## Claims

1. A lens hood device being attached at the tip of a lens barrel member containing an object lens for converging a reflection image of a subject, and having an opening about the center of an optical axis of the object lens as a central axis and crossing perpendicularly the center of the optical axis,
the lens hood device comprising:
a plurality of lens barriers that slide rotatably between a position to cover the whole face of the opening and a position to open the opening; and
a housing to contain the plural lens barriers when the lens barriers are at the position to open the opening.

2. The lens hood device according to claim 1, wherein
the housing comprises a first barrier case member comprising a rotational axis with which the plural lens barriers are engaged and being positioned toward the subject, and a second barrier case member engaged with the first barrier case member;
in the second barrier case member, a groove is formed about the central axis so as to penetrate the second barrier case member;
in a space between the first barrier case member and the second barrier case member, a barrier opening/closing switching member that penetrates the groove and that has a hook erected to be inserted-engaged freely with the groove; and
on a face of the second barrier case member facing the first barrier case member, a barrier-drive transferring member comprising a concave to be fitted with the hook penetrating the groove.

3. The lens hood device according to claim 2, wherein
the housing is contained via the first barrier case member between a covering member that covers the housing and an attaching/detaching member that is engaged firmly with the covering member; and
the attaching/detaching member is engaged in a detachable manner with the tip of the lens barrel member.

4. The lens hood device according to claim 3, wherein
the first barrier case member and the second barrier case member comprise the openings, and
the lens hood device comprises a mask member that is engaged firmly with the second barrier case member, to which the covering member is engaged rotatably, and comprises a second opening with an area larger than the area of the former opening.

5. An image pickup device comprising:
a lens barrel member comprising an object lens to converge a reflection image of a subject;
an image pickup element to receive the reflection image converged by the object lens and convert the reflection image into a video signal;
an information storing member to store, in an information medium, the video signal converted by the image pickup element; and
the lens hood device according to claim 1 at the tip of the lens barrel member.

6. The image pickup device according to claim 5, comprising a rotational member at an engagement site between the lens hood device and the tip, for moving the hook along the shape of the groove.

7. The image pickup device according to claim 5, further comprising a driving member to apply energy for the hook to move along the shape of the groove; and an indicator to indicate a start of applying the energy to the driving member for the move.

## Amended claims

### Amended claims under Art. 19.1 PCT

**1.** (Amended) A lens hood device being attached at the tip of a lens barrel member containing an object lens for converging a reflection image of a subject, and having an opening about the center of an optical axis of the object lens as a central axis and crossing perpendicularly the center of the optical axis,
the lens hood device comprising:
a plurality of lens barriers that slide rotatably between a position to cover the whole face of the opening and a position to open the opening;
a housing to contain the plural lens barriers when the lens barriers are at the position to open the Opening; and
the housing comprises a first barrier case member comprising a rotational axis with which the plural lens barriers are engaged and being positioned toward the subject and a second barrier case member engaged with the first barrier case member;
in the second barrier case member, a groove is formed about the central axis so as to penetrate the second barrier case member;
in a space between the first barrier case member and the second barrier case member, a barrier opening/closing switching member that penetrates the groove and that has a hook erected to be inserted-engaged freely with the groove; and
on a face of the second barrier case member facing the first barrier case member, a barrier-drive transferring member comprising a concave to be fitted with the hook penetrating the groove.

**2.** (Amended) The lens hood device according to claim 1, wherein the housing is contained via the first barrier case member between a covering member that covers the housing and an attaching/detaching member that is engaged firmly with the covering member; and
the attaching/detaching member is engaged in a detachable manner with the tip of the lens barrel member.

**3.** (Amended) The lens hood device according to claim 2, wherein the first barrier case member and the second barrier case member comprise the openings, and
the lens hood device comprises a mask member that is engaged firmly with the second barrier case member, to which the covering member is engaged rotatably, and comprises a second opening with an area larger than the area of the former opening.

**4.** (Amended) An image pickup device comprising:
a lens barrel member comprising an object lens to converge a reflection image of a subject;
an image pickup element to receive the reflection image converged by the object lens and convert the reflection image into a video signal;
an information storing member to store, in an information medium, the video signal converted by the image pickup element; and
the lens hood device according to claim 1 at the tip of the lens barrel member.

**5.** (Amended) The image pickup device according to claim 4, comprising a rotational member at an engagement site between the lens hood device and the tip, for moving the hook along the shape of the groove.

**6.** (Amended) The image pickup device according to claim 4, further comprising a driving member to apply energy for the hook to move along the shape of the groove; and an indicator to indicate a start of applying the energy to the driving member for the move.

**7.** (Cancelled)
